# EUROPEAN PATENT APPLICATION

(11) **EP 4 572 393 A1**
(43) Date of publication of application: **18.06.2025**
(21) Application number: 23870867.1
(22) Date of filing: 26.09.2023
(51) Int. Cl.: H04W 28/06

(54) **PROTOCOL DATA UNIT SET TRANSMISSION METHOD AND APPARATUS**

(30) Priority: 30.09.2022 CN 202211216987
(71) Applicant: Huawei Technologies Co., Ltd., Shenzhen, Guangdong 518129 (CN)
(72) Inventor: PAN, Qi, Shenzhen, Guangdong 518129 (CN); NI, Hui, Shenzhen, Guangdong 518129 (CN); HUANG, Zhenglei, Shenzhen, Guangdong 518129 (CN)
(74) Representative: Pfenning, Meinig & Partner mbB
(86) International application number: PCT/CN2023/121751
(87) International publication number: WO 2024/067640

(57) **Abstract**

A protocol data unit set transmission method and apparatus are provided. The method includes: **In** a process in which a first device transmits a protocol data unit set of a service used on a terminal device to a second device, the first device determines that a first packet in the protocol data unit set fails to be transmitted, and then discards a packet whose sequence number is greater than a sequence number of the first packet in the protocol data unit set. According to the foregoing method, a waste of resources and burden caused by meaningless resource consumption on transmission on the first device side can be avoided, thereby ensuring efficient transmission of the protocol data unit set.

## Description

### CROSS-REFERENCE TO RELATED APPLICATIONS

This application claims priority to Chinese Patent Application No. 202211216987.1, filed with the China National Intellectual Property Administration on September 30, 2022 and entitled "PROTOCOL DATA UNIT SET TRANSMISSION METHOD AND APPARATUS", which is incorporated herein by reference in its entirety.

### TECHNICAL FIELD

Embodiments of this application relate to the field of wireless communication, and in particular, to a protocol data unit set transmission method and apparatus.

### BACKGROUND

Currently, real-time media services, such as currently emerging services like virtual reality (virtual reality, VR), augmented reality (augmented reality, AR), mixed reality (mixed reality, MR), and cloud games, have strict requirements on end-to-end delays, and data processing corresponding to an upper-layer media service during encoding and transmission is no longer performed at a granularity of a packet. For example, encoding is performed at a media layer usually at a granularity of a media frame, a slice, or the like, that is, the media frame, the slice, or the like may be independently encoded. In addition, a receiver performs decoding and display also at a granularity of a media frame, a slice, or the like. The media frame, the slice, or the like usually includes a plurality of IP packets (due to a size limitation of the IP packet).

Based on this, a protocol data unit set (Protocol Data Unit Set, PDU Set) is defined in the standard as a basic unit that can be independently processed at a media service layer. One PDU set may include a plurality of PDU packets (briefly referred to as packets). A quality of service (quality of service, QoS) processing mechanism at a granularity of a PDU set is proposed in a current standard, that is, a loss rate and a delay requirement at a granularity of a PDU set are provided, and a relationship between different packets and the PDU set is identified for the packets included in the PDU set to be scheduled, processed, and transmitted as a whole, to ensure user service experience.

However, if one or more packets in the PDU set are lost or damaged during transmission of the PDU set, it may be difficult to decode or display the entire PDU set correctly. Therefore, a corresponding PDU set processing mechanism needs to be provided for this scenario.

### SUMMARY

This application provides a protocol data unit set transmission method and apparatus, to ensure efficient transmission of a protocol data unit set.

According to a first aspect, this application provides a protocol data unit set transmission method. The method includes:
In a process in which a first device transmits a protocol data unit set of a service used on a terminal device to a second device, the first device determines that a first packet in the protocol data unit set fails to be transmitted; and the first device discards a packet whose sequence number is greater than a sequence number of the first packet in the protocol data unit set.

According to the foregoing method, when finding that a packet fails to be transmitted in a process of transmitting protocol unit data, the first device actively discards transmission of a subsequent packet whose sequence number is greater than the sequence number of the packet, to avoid a waste of resources and burden caused by meaningless resource consumption on transmission on the first device side, thereby ensuring efficient transmission of the protocol data unit set.

The sequence number of the packet may also be referred to as a serial number of the packet. The sequence number may be used for representing a sending sequence of packets on a server side. A packet with a larger sequence number is sent after a packet with a smaller sequence number.

In a possible design, the protocol data unit set includes a plurality of uplink packets, and the first device is the terminal device; or the protocol data unit set includes a plurality of downlink packets, and the first device is a user plane network element; and the first device determines a plurality of packets that belong to the protocol data unit set, and the first device adds a sequence number of each packet in the plurality of packets to a header of the corresponding packet.

According to the foregoing design, the terminal device may determine that the protocol data unit set includes sequence numbers of the plurality of uplink packets and add the sequence numbers to a header of the packet, and the user plane network element may determine that the protocol data unit set includes sequence numbers of the plurality of downlink packets and add the sequence numbers to a header of the packet. By obtaining the sequence numbers of the packets, a sequence of the packets may be further determined based on the sequence numbers of the packets, to determine a priority of the packets. A packet with a smaller sequence number has a higher priority.

In a possible design, when the first device determines a plurality of packets that belong to the protocol data unit set, the following manners may be used, but constitute no limitation:
Manner 1: When a received second packet includes a preset field and a received third packet includes the preset field, the first device determines that a packet received after the second packet to the third packet belong to the protocol data unit set.

On a terminal device side, when the terminal device determines packets included in the protocol data unit set, packet disorder generally does not occur.

Optionally, on a user plane network element side, to avoid packet disorder, the user plane network element may further determine a sequence number of a 1^{st} packet in the protocol data unit set based on a sequence number of the second packet, and determine a sequence number of a last packet in the protocol data unit set based on a sequence number of the third packet. Further, the user plane network element may determine, based on the sequence number of the third packet and sequence numbers of another arrived packet, whether all packets in the protocol data unit set have arrived, that is, whether all packets whose sequence numbers are greater than the sequence number of the second packet and less than or equal to the sequence number of the third packet have arrived. If all the packets whose sequence numbers are greater than the sequence number of the second packet and less than or equal to the sequence number of the third packet have arrived, the user plane network element determines that the packets in the protocol data unit set have arrived. If all the packets whose sequence numbers are greater than the sequence number of the second packet and less than or equal to the sequence number of the third packet have not arrived, the user plane network element further determines which packet or packets have not arrived, and waits for the packet that has not arrived to arrive at the first device.

Manner 2: The first device determines that packets with a same timestamp belong to a same protocol data unit set.

In a possible design, the first device receives first indication information from the session management network element, where the first indication information indicates to discard, when a packet that fails to be transmitted is determined in the process of transmitting the protocol data unit set, a packet whose sequence number is greater than a sequence number of the packet that fails to be transmitted in the protocol data unit set, or may be understood as discarding a packet that is in the protocol data unit set and that is after the packet fails to be transmitted.

According to the foregoing design, the first device may obtain the first indication information from the session management network element, where the first indication information indicates to discard, when the packet that fails to be transmitted is determined in the process of transmitting the protocol data unit set, the packet whose sequence number is greater than the sequence number of the packet that fails to be transmitted in the protocol data unit set. This can avoid a waste of resources and burden caused by meaningless resource consumption on transmission on the first device side, thereby ensuring efficient transmission of the protocol data unit set.

In a possible design, the first device performs transmission in ascending order of sequence numbers of the plurality of packets in the protocol data unit set.

For example, the first device performs transmission in ascending order of sequence numbers of the plurality of packets in the protocol data unit set, that is, performs transmission according to a sequence or a priority sequence of the plurality of packets in the protocol data unit set.

According to the foregoing design, the first device may preferentially transmit a packet with a small sequence number, to be specific, ensure that a packet with a small sequence number or a packet ranked ahead in the protocol data unit set is successfully transmitted, so that the second device can decode the packet with the small sequence number, thereby ensuring efficient transmission of the protocol data unit set.

In a possible design, the protocol data unit set includes a first-part packet and a second-part packet, the first-part packet and the second-part packet do not overlap, a priority of the first-part packet is higher than a priority of the second-part packet, a header of each packet in the first-part packet includes a first identifier, a header of each packet in the second-part packet includes a second identifier, and a ratio of a total quantity of the first-part packet to a total quantity of packets included in the protocol data unit set is greater than or equal to a preset ratio of a transmission success rate. It may be understood as that a sequence number of the first-part packet is less than a sequence number of the second-part packet, or the first-part packet is ranked ahead in the protocol data unit set, and the second-part packet is ranked behind in the protocol data unit set. Before the first device determines that the first packet in the protocol data unit set fails to be transmitted, the first device transmits the first-part packet through a first QoS flow based on the first identifier, and transmits the second-part packet through a second QoS flow based on the second identifier.

According to the foregoing design, the first device may transmit two parts of packets included in the protocol data unit set through different QoS flows. Because the priority of the first-part packet is higher than the priority of the second-part packet, a configuration parameter of the first QoS flow may be adjusted to preferentially ensure that the first-part packet is successfully transmitted, thereby ensuring efficient transmission of the protocol data unit set, improving a network capacity, and ensuring user service experience.

In a possible design, the first device receives second indication information from a session management network element, where the second indication information indicates a preset ratio of the transmission success rate.

In a possible design, the protocol data unit set includes the plurality of uplink packets, and the first device is the terminal device; or the protocol data unit set includes the plurality of downlink packets, and the first device is the user plane network element.

The first device determines the first-part packet and the second-part packet based on the preset ratio of the transmission success rate; adds the first identifier to the header of each packet in the first-part packet; and adds the second identifier to the header of each packet in the second-part packet.

In addition, when the protocol data unit set includes the plurality of uplink packets and the first device is an access network device, the terminal device determines the first-part packet and the second-part packet based on the preset ratio of the transmission success rate; adds the first identifier to the header of each packet in the first-part packet; and adds the second identifier to the header of each packet in the second-part packet. Alternatively, when the protocol data unit set includes the plurality of downlink packets, and the first device is an access network device, the user plane network element determines the first-part packet and the second-part packet based on the preset ratio of the transmission success rate, and adds the first identifier to the header of each packet in the first-part packet.

According to the foregoing design, the terminal device or the user plane network element determines the first-part packet and the second-part packet based on the preset ratio of the transmission success rate, and adds the first identifier to the first-part packet and adds the second identifier to the second-part packet, to distinguish the first-part packet from the second-part packet, thereby ensuring subsequent differentiated packet transmission processing.

In a possible design, the first identifier is an identifier of the first QoS flow, and the second identifier is an identifier of the second QoS flow.

It may be understood that when the terminal device adds the first identifier to the header of each packet in the first-part packet and adds the second identifier to the header of each packet in the second-part packet, the first identifier may be an identifier of a first priority, and the second identifier may be an identifier of a second priority. The first priority is higher than the second priority. The first device may ensure, based on the identifier of the first priority and the identifier of the second priority, that a packet having the identifier of the first priority is preferentially transmitted.

In a possible design, if the protocol data unit set includes the plurality of downlink packets, and the first device is the user plane network element, the header of each packet is a general packet radio service tunneling protocol-user plane GTP-U layer header. If the protocol data unit set includes the plurality of uplink packets, and the first device is the terminal device, the header of each packet is a packet data convergence protocol PDCP layer header or a service data adaptation protocol SDAP layer header.

In a possible design, after the packet whose sequence number is greater than the sequence number of the first packet in the protocol data unit set is discarded, the first device continues to transmit a packet whose sequence number is less than the sequence number of the first packet.

According to the foregoing design, although a packet whose sequence number is greater than the sequence number of the first packet is discarded, the first device further needs to ensure transmission of a packet whose sequence number is less than the sequence number of the first packet.

**In** a possible design, when the first device determines that the first packet in the protocol data unit set fails to be transmitted, the first device determines that a quantity of retransmissions of the first packet exceeds a retransmission threshold; or the first device determines that transmission duration of the first packet exceeds a transmission duration threshold.

In a possible design, the protocol data unit set includes the plurality of uplink packets; the first device is the terminal device, and the second device is the access network device; or the first device is the access network device, and the second device is the user plane network element; or the first device is the user plane network element, and the second device is a data network.

In a possible design, the protocol data unit set includes the plurality of downlink packets; the first device is the user plane network element, and the second device is the access network device; or the first device is the access network device, and the second device is the terminal device.

According to a second aspect, this application provides a protocol data unit set transmission method. The method includes:
A session management network element receives first indication information from a policy control network element, where the first indication information indicates to discard, when a packet that fails to be transmitted is determined in a process of transmitting a protocol data unit set, a packet whose sequence number is greater than a sequence number of the packet that fails to be transmitted in the protocol data unit set; and the session management network element sends the first indication information to a first device.

According to the foregoing design, the session management network element may receive the first indication information from the policy control network element, and notify the first device of the first indication information, so that the packet that fails to be transmitted is determined based on the first indication information in the process of transmitting the protocol data unit set, the first device discards the packet whose sequence number is greater than the sequence number of the packet that fails to be transmitted in the protocol data unit set.

In a possible design, the session management network element receives second indication information from the policy control network element, where the second indication information indicates a preset ratio of a transmission success rate, and the preset ratio of the transmission success rate is a minimum ratio of a total quantity of packets that need to be successfully transmitted before presence of the packet that fails to be transmitted in the protocol data unit set to a total quantity of packets included in the protocol data unit set; and the session management network element sends the second indication information to the first device.

According to a third aspect, this application provides a protocol data unit set transmission method. The method includes:
A policy control network element receives first indication information from an application function network element, where the first indication information indicates to discard, when a packet that fails to be transmitted is determined in a process of transmitting a protocol data unit set, a packet whose sequence number is greater than a sequence number of the packet that fails to be transmitted in the protocol data unit set; and the policy control network element sends the first indication information to a session management network element.

According to the foregoing design, the policy control network element may receive the first indication information from the application function network element, and notify the session management network element of the first indication information.

In a possible design, the policy control network element receives second indication information from the application function network element, where the second indication information indicates a preset ratio of a transmission success rate, and a minimum ratio of a total quantity of packets that need to be successfully transmitted before presence of the packet that fails to be transmitted in the protocol data unit set to a total quantity of packets included in the protocol data unit set.

The policy control network element sends the second indication information to the session management network element.

In addition, in a possible design, when the first device is an access network device, the terminal device may also send the first indication information to the first device.

In a possible design, the second indication information may also be preconfigured on the terminal device or the user plane network element in a preconfiguration manner.

According to a fourth aspect, this application provides an apparatus. The apparatus may perform the foregoing method design. The apparatus may be a chip or a circuit that can perform the functions corresponding to the foregoing method, or a device including the chip or the circuit.

In a possible implementation, the apparatus includes: a memory, configured to store computer-executable program code; and a processor, where the processor is coupled to the memory. The program code stored in the memory includes instructions. When the processor executes the instructions, the apparatus or a device on which the apparatus is installed is enabled to perform the method in any one of the foregoing possible designs.

The apparatus may further include a communication interface. The communication interface may be a transceiver. Alternatively, if the apparatus is a chip or a circuit, the communication interface may be an input/output interface of the chip, for example, an input/output pin.

In a possible design, the apparatus includes corresponding functional units, separately configured to implement the steps in the foregoing method. Functions may be implemented by hardware, or may be implemented by hardware executing corresponding software. The hardware or the software includes one or more units that correspond to the foregoing functions.

According to a fifth aspect, this application provides a computer-readable storage medium. The computer-readable storage medium stores a computer program. When the computer program is run on an apparatus, the method according to any one of the foregoing possible designs is performed.

According to a sixth aspect, this application provides a computer program product. The computer program product includes a computer program. When the computer program is run on an apparatus, the method according to any one of the foregoing possible designs is performed.

### BRIEF DESCRIPTION OF DRAWINGS

FIG. 1 is a diagram of an architecture of a mobile communication system to which this application is applied;
FIG. 2 is an overview flowchart of a protocol data unit set transmission method according to this application;
FIG. 3 is a first diagram of a protocol data unit set transmission method when a protocol data unit set includes a downlink packet according to this application;
FIG. 4A and FIG. 4B are a first diagram of a protocol data unit set transmission method when a protocol data unit set includes an uplink packet according to this application;
FIG. 5A and FIG. 5B are a second diagram of a protocol data unit set transmission method when a protocol data unit set includes a downlink packet according to this application;
FIG. 6A and FIG. 6B are a second diagram of a protocol data unit set transmission method when a protocol data unit set includes a downlink packet according to this application;
FIG. 7 is a first diagram of a structure of a communication apparatus according to this application; and
FIG. 8 is a second diagram of a structure of a communication apparatus according to this application.

### DESCRIPTION OF EMBODIMENTS

The following clearly and completely describes the technical solutions in embodiments of this application with reference to the accompanying drawings in embodiments of this application. It is clear that the described embodiments are merely some but not all of embodiments of this application. The terms "first" and "second", corresponding term numbers, and the like in the specification, the claims, and the accompanying drawings of this application are used to distinguish between similar objects, and are not necessarily used to describe a specific sequence or order. It should be understood that the terms used in such a way are interchangeable in proper circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device.

In descriptions of this application, "/" means "or" unless otherwise specified. For example, A/B may indicate A or B. In this application, "and/or" describes only an association relationship for describing associated objects and indicates that three relationships may exist. For example, A and/or B may represent the following three cases: Only A exists, both A and B exist, and only B exists. In addition, in the descriptions of this application, "at least one item" means one or more items, and "a plurality of items" means two or more items. "At least one of the following items" or a similar expression thereof means any combination of these items, including a single item or any combination of a plurality of items. For example, at least one of a, b, or c may indicate a, b, c, a and b, a and c, b and c, or a, b, and c, where a, b, and c may be singular or plural.

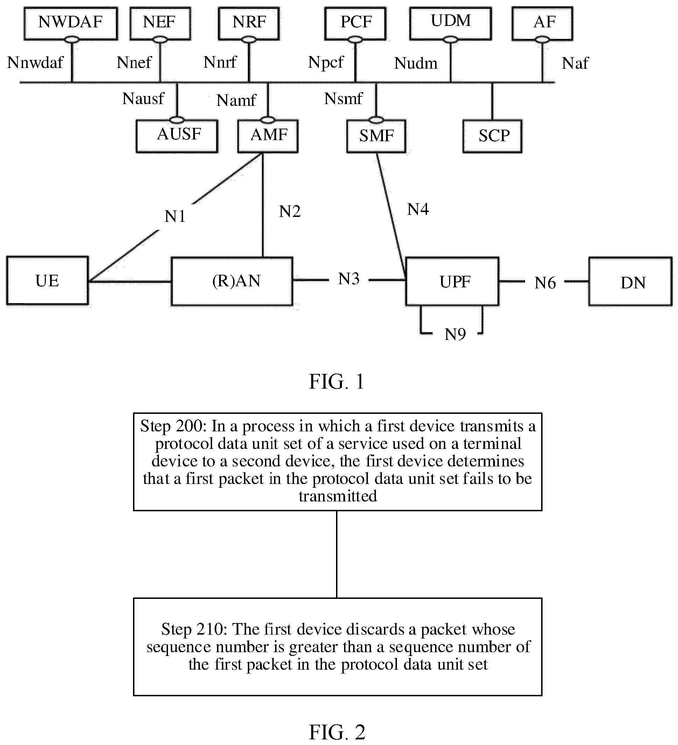

FIG. 1 shows a 5G communication system formulated in a 3rd generation partnership project (3rd generation partnership project, 3GPP) standard. The communication system includes a terminal device (for example, user equipment (user equipment, UE)), an access network (access network, AN) device (for example, a radio access network (radio access network, RAN) device), a core network (core network, CN). Logically, for a data network (data network, DN), network elements of the core network may be classified into two parts: a user plane and a control plane. The control plane is responsible for mobile network management, and the user plane is responsible for service data transmission.

The terminal device is an entrance for interaction between a mobile user and a network, and can provide a basic computing capability and a storage capability, display a service window to the user, and receive a user operation input. A next generation terminal device (NextGen UE) may establish a signal connection and a data connection to the access network device by using a new radio technology, to transmit a control signal and service data to the mobile network. The terminal device may include various handheld devices, vehicle-mounted devices, wearable devices, or computing devices that have a wireless communication function, other processing devices connected to a wireless modem, and various forms of terminals, such as a mobile station (mobile station, MS), a terminal (terminal), and a soft terminal, for example, a water meter, an electricity meter, and a sensor.

The access network device is deployed near the terminal device, provides a network access function for an authorized user in a specific area, and can determine transmission tunnels of different quality based on a user level, a service requirement, and the like to transmit user data. The access network device can manage resources of the access network device, properly use the resources, provide an access service for the terminal device as required, and is responsible for forwarding the control signal and the user data between the terminal device and the core network.

The core network is responsible for maintaining subscription data of the mobile network, managing a network element of the mobile network, and providing functions such as session management, mobility management, policy management, and security authentication for the terminal device. The core network provides network access authentication for the terminal device when the terminal device is attached; allocates a network resource to the terminal device when the terminal device has a service request; updates a network resource for the terminal device when the terminal device moves; provides a fast recovery mechanism for the terminal device when the terminal device is idle; releases a network resource for the terminal device when the terminal device is detached; and provides a data routing function for the terminal device when the terminal device has service data, for example, forwards uplink data to the data network, or receives downlink data of the terminal device from the data network and forwards the downlink data to the access network device, so that the access network device sends the downlink data to the terminal device.

The data network is a data network that provides a service for a user. Generally, a client is located in the terminal device, and a server is located in the data network. The data network may be a private network, for example, a local area network, or may be an external network that is not managed or controlled by an operator, for example, the Internet (Internet), or may be a dedicated network jointly deployed by operators, for example, a network that provides an IP multimedia core network subsystem (IP multimedia core network subsystem, IMS) service.

A core network user plane includes a user plane function (user plane function, UPF). A core network control plane includes an access and mobility management function (access and mobility management function, AMF), a session management function (session management function, SMF), a network exposure function (network exposure function, NEF), a network function repository function (NF repository function, NRF), a unified data management (unified data management, UDM) function, a policy control function (policy control function, PCF), and an application function (application function, AF).

The core network control plane uses a service-oriented architecture. Control plane network elements interact with each other in a service invoking manner to replace a point-to-point communication manner in a conventional architecture. In the service-oriented architecture, the control plane network element exposes a service to another control plane network element, so that the another control plane network element invokes the service. In point-to-point communication, a communication interface between control plane network elements stores a set of specific messages, and the messages can be used only by control plane network elements at two ends of the interface during communication.

The following briefly describes functions of functional entities in the core network.
1. A session management network element is mainly configured to: manage a session, allocate and manage an IP address of a terminal device, select an endpoint that can manage a user equipment plane function interface and a policy control or charging function interface, perform downlink data notification, and the like. In 5G communication, the session management network element may be an SMF network element. In future communication such as 6G communication, the session management function network element may still be the SMF network element or have another name. This is not limited in this application. Nsmf is a service-oriented interface provided by the SMF. The SMF may communicate with another network function through Nsmf.
2. An access management network element is mainly used for mobility management, access management, and the like. For example, the access management network element may be a mobility management entity (mobility management entity, MME) function in a 4G communication network or an AMF network element in a 5G network. In future communication such as 6G communication, the access management network element may still be the AMF network element or have another name. This is not limited in this application. Namf is a service-oriented interface provided by the AMF. The AMF may communicate with another network function through Namf.
3. A network exposure network element is mainly configured to securely expose, to the outside, a service, a capability, and the like that are provided by a 3GPP network function. In 5G communication, the network exposure network element may be an NEF network element. In future communication such as 6G communication, the network exposure function network element may still be the NEF network element or have another name. This is not limited in this application. Nnef is a service-oriented interface provided by the NEF. The NEF may communicate with another network function through Nnef.
4. A network repository network element is configured to: provide service registration, discovery, and authorization, and maintain available network function (network function, NF) instance information, to implement on-demand configuration of a network function and a service and interconnection between NFs. In 5G communication, the network repository network element may be an NRF network element. In future communication such as 6G communication, the network repository function network element may still be the NRF network element or have another name. This is not limited in this application. Nnrf is a service-oriented interface provided by the NRF. The NRF may communicate with another network function through Nnrf.
5. A policy control network element is configured to: guide a unified policy framework for network behaviors, and provide policy rule information and the like for a control plane function network element (for example, the AMF or the SMF). In 5G communication, the policy control network element may be a PCF network element. In future communication such as 6G communication, the policy control network element may still be the PCF network element or have another name. This is not limited in this application. Npcf is a service-oriented interface provided by the PCF. The PCF may communicate with another network function through Npcf.
6. A data management network element is used for user identifier processing, subscription, authentication access, registration, mobility management, or the like. In 5G communication, the data management network element may be a UDM network element. In future communication such as 6G communication, the data management network element may still be the UDM network element or have another name. This is not limited in this application. Nudm is a service-oriented interface provided by the UDM. The UDM may communicate with another network function through Nudm.
7. An application network element is configured to: perform application-affected data routing, access a network exposure function, interact with a policy framework to perform policy control, or the like. In 5G communication, the application network element may be an AF network element. In future communication such as 6G communication, the application network element may still be the AF network element or have another name. This is not limited in this application. Naf is a service-oriented interface provided by the AF. The AF may communicate with another network function through Naf.
8. A user plane network element is used for packet routing and forwarding, quality of service (quality of service, QoS) processing for user plane data, or the like. In 5G communication, the user plane network element may be a user plane function (user plane function, UPF) network element. In future communication such as 6G communication, the user plane network element may still be the UPF network element or have another name. This is not limited in this application.

It may be understood that the core network may further include another network element. This is not limited in this application.

For ease of understanding of embodiments of this application, several basic concepts in embodiments of this application are briefly described.
1. QoS flow (QoS flow): When UE has a service communication requirement, the UE establishes a data connection session (for example, a PDU session or a session in another form), and in the data connection session, a corresponding QoS flow specifically carries a service flow. Specifically, the UE obtains an IP address by establishing the PDU session, to interact with an external service server, to implement service communication. A 5GS maps a corresponding service to different QoS flows based on service flow description information, for example, a service flow template (service data flow template, SDF template), to perform corresponding QoS processing.

A QoS flow identifier (QoS flow identifier) uniquely identifies different QoS flows in a PDU session.

In an existing QoS mechanism, service assurance is performed at a granularity of a packet, for example, a packet error rate (packet error rate, PER) and a packet delay budget (packet delay budget, PDB) in a current QoS parameter. Service data is mapped to a same QoS flow for transmission, the same QoS flow has a same QoS parameter, and packets corresponding to the same QoS flow are processed and transmitted one by one based on the corresponding same QoS parameter by using a same policy. In other words, all packets in the same QoS flow are processed in a same and non-differentiated manner during transmission.

### 2. GPRS tunneling protocol-user plane (GPRS tunneling protocol-user plane, GTP-U) tunnel:

For example, a 5G communication system is used as an example. In a PDU session establishment process, a GTP-U tunnel is used for a connection between a RAN and a UPF, to be specific, data from/to a UE side is added to the tunnel for sending. The GTP-U tunnel is at a granularity of a PDU session, that is, a GTP-U tunnel between the RAN and the UPF is established for each PDU session.

### 3. PDU packet:

The PDU packet is a basic unit in end-to-end network transmission, may be an IP packet (packet), a TCP segment (segment), or a UDP datagram (datagram). In this application, an example in which the PDU packet is an IP packet is used for description.

One PDU set may include a plurality of PDU packets. For example, one PDU set includes a plurality of IP packets.

If one or more packets in the PDU set are lost or damaged during transmission of the PDU set, it may be difficult to decode or display the entire PDU set correctly. The following scenarios may be specifically included:
Scenario 1: When a PDU packet in a PDU set is lost or damaged, a receive end cannot correctly decode and display remaining PDU packets in the PDU set.
Scenario 2: To improve transmission reliability, before sending a PDU set, a service layer or an application layer of a transmit end performs forward error correction (forward error correction, FEC) processing on the PDU set, that is, adds an additional redundant packet to alleviate impact of a packet loss on service experience during transmission.

For Scenario 2, when the PDU set is transmitted, it is ensured that a specific quantity of packets in the PDU set can be correctly transmitted, and a specific quantity of packets may be allowed to be failed to be transmitted.

Scenario 3: After a receive end receives first (n-1) packets in a PDU set and an n^{th} packet fails to be transmitted, a codec of the receive end restores, based on the first (n-1) packets, service content corresponding to the first (n-1) packets, that is, after the receive end receives a part of packets whose sequence numbers are ranked ahead in the PDU set, content corresponding to the PDU set may be restored, where n is a positive integer. In other words, a position of a 1st lost packet in the PDU set affects whether the receive end can decode content corresponding to the PDU set, and the packets whose sequence numbers are ranked ahead in the PDU set has higher transmission priorities. An example in which a media service is used, the PDU set may be a media frame, and corresponding service content is a frame of picture in a media playing process. When the n^{th} packet is lost, the receive end may reply, based on the first (n-1) packets, a part of content of a picture frame corresponding to the first (n-1) packets.

Based on the foregoing scenarios, this application provides a protocol data unit set transmission method, to ensure efficient transmission of a protocol data unit set.

It should be noted that in the following method, a first device transmits a protocol data unit set to a second device.

In a possible implementation, if the protocol data unit set may include a plurality of uplink packets, the first device may be a terminal device, and the second device may be an access network device; or the first device may be an access network device, and the second device may be a user plane network element; or the first device may be a user plane network element, and the second device may be a data network or an application server.

In another possible implementation, if the protocol data unit set may include a plurality of downlink packets, the first device may be a user plane network element, and the second device may be an access network device; or the first device may be an access network device, and the second device may be a terminal device.

The protocol data unit set is a protocol data unit set of a service used on a terminal. The service used on the terminal may be a media service, for example, a currently emerging service like virtual reality (virtual reality, VR), augmented reality (augmented reality, AR), mixed reality (mixed reality, MR), or cloud gaming.

As shown in FIG. 2, the method includes the following steps.

Step 200: In a process in which a first device transmits a protocol data unit set of a service used on a terminal device to a second device, the first device determines that a first packet in the protocol data unit set fails to be transmitted.

The first packet is a 1st packet that fails to be transmitted in the protocol data unit set.

For example, after an XR service is started, data transmission is performed between the terminal device and an application server over a 5G network. The first device transmits the protocol data unit set of the service used on the terminal device to the second device. The first device determines that the first packet in the protocol data unit set fails to be transmitted. For example, when the first device determines that a quantity of retransmissions of the first packet exceeds a retransmission threshold, the first device determines that the first packet in the protocol data unit set fails to be transmitted. Alternatively, when the first device determines that transmission duration of the first packet exceeds a transmission duration threshold, the first device determines that the first packet in the protocol data unit set fails to be transmitted.

In addition, when the protocol data unit set is transmitted between an access network device and the terminal device, the determining that a first packet fails to be transmitted includes: determining that a delay of transmission of the packet exceeds a packet delay budget of the packet. Specifically, if a radio link control (radio link control, RLC) layer does not send the packet to a media access control (media access control, MAC) layer for transmission in time, that is, the packet is still in a buffer of the RLC layer after PDB time expires, it is determined that the packet exceeds the PDB and is not scheduled for transmission, in other words, it is determined that the packet is lost or fails to be transmitted.

In addition, when there is a feedback mechanism between the access network device and the terminal device, the access network device may determine, based on a feedback of the terminal device, whether the packet is successfully transmitted. For example, when a packet is transmitted through the MAC layer, the MAC layer may split and reassemble an upper-layer packet, to ensure that the packet is suitable for channel transmission. The MAC layer stores a mapping relationship between the packet and a MAC layer transmission data block, and the MAC layer determines, based on a feedback status of a hybrid automatic repeat request (hybrid automatic repeat request, HARQ), whether the packet is successfully transmitted.

In addition, the first device may further determine, in another manner, that the first packet in the protocol data unit set fails to be transmitted. This is not limited in this application.

Step 210: The first device discards a packet whose sequence number is greater than a sequence number of the first packet in the protocol data unit set.

For example, the first device may learn of a sequence number of each packet, and after determining that the first packet fails to be transmitted, the first device discards the packet whose sequence number is greater than the sequence number of the first packet in the protocol data unit set. Sequence number of packets may represent a sequence of the packets in a protocol data unit.

In addition, in a possible implementation, the first device may further receive first indication information from a session management network element. The first indication information indicates to discard, when the packet that fails to be transmitted is determined in the process of transmitting the protocol data unit set, the packet whose sequence number is greater than the sequence number of the packet that fails to be transmitted in the protocol data unit set. Therefore, after determining, based on the first indication information and the sequence number of the packet, that the first packet fails to be transmitted, the first device may discard the packet whose sequence number is greater than the sequence number of the first packet in the protocol data unit set.

For example, an application function network element may send the first indication information to a policy control network element, and the policy control network element sends a policy control and charging (policy control and charging, PCC) rule to the session management network element. The PCC rule includes the first indication information.

In a possible implementation, the first device may determine the sequence number of the packet in but not limited to the following manners:
(1) If the protocol data unit set includes a plurality of uplink packets, the first device is the terminal device. The first device may determine a sequence of the plurality of uplink packets.
   For example, the first device determines the sequence number of the uplink packet based on a sequence number (sequence number, SN) of a real-time transport protocol (Real-time Transport Protocol, RTP) header of the uplink packet. Further, the first device may add the sequence number of the uplink packet to a header of each of the plurality of uplink packets. The header of each uplink packet is a packet data convergence protocol (packet data convergence protocol, PDCP) layer header or a service data adaptation protocol (service data adaptation protocol, SDAP) layer header.
(2) If the protocol data unit set includes a plurality of downlink packets, the first device is a user plane network element. The first device may determine a sequence of the plurality of downlink packets. For example, the first device distinguishes different protocol data unit sets based on a demarcation field "M" bit, a timestamp, or the like of an RTP header of the downlink packet, and determines a sequence number of the downlink packet in the protocol data unit set based on the SN of the RTP header. Further, the first device may add the sequence number of the downlink packet to a header of each of the plurality of downlink packets. A header of each downlink packet is a GTP-U layer header.
(3) If the first device is an access network device, the access network device may determine the sequence number of the packet based on a header of the packet.

It can be learned from (1) or (2) that, if the protocol data unit set includes the plurality of uplink packets, the access network device may determine the sequence number of the packet based on the PDCP layer header or the SDAP layer header of the packet. If the protocol data unit set includes the plurality of downlink packets, the access network device may determine the sequence number of the packet based on the GTP-U layer header or the RTP layer header of the packet.

For example, the first device may further determine the plurality of packets that belong to the protocol data unit set. Specifically, the following manners may be used, but constitute no limitation:
Manner 1: When a received second packet includes a preset field and a received third packet includes the same preset field, the first device determines that a packet received after the second packet to the third packet belong to the protocol data unit set. In other words, two adjacent protocol data unit sets may be spaced by the preset field. In addition, it should be noted that none of packets received after the second packet to packets received before the third packet includes the preset field.

For example, the first device receives a packet 1, where the packet 1 includes a preset field. After receiving the packet 1, the first device further receives a packet 2 to a packet 11, where the packet 11 also includes the preset field. In this case, the packet 2 to the packet 11 form a protocol data unit set. The packet 2 to the packet 10 do not include the preset field.

For example, the preset field herein may be an "M" field in a real-time transport protocol (Real-time Transport Protocol, RTP) header. For example, a value of an "M" field in the second packet and the third packet is "1", and a value of an "M" field in a packet whose sequence number is greater than a sequence number of the second packet and less than a sequence number of the third packet is "0". That is, the "M" field indicates a boundary of the current protocol data unit set.

In addition, during packet transmission (especially during downlink packet transmission), disorder may occur due to problems such as network jitter. Therefore, the following two additional cases may occur:
Case 1: A packet that belongs to the protocol data unit set arrives at the first device later than the third packet. The protocol data unit set herein is a protocol data unit set including the third packet.

For example, the first device receives a packet 1, where the packet 1 includes a preset field. After receiving the packet 1, the first device further sequentially receives a packet 2, a packet 3, a packet 5, a packet 6, a packet 9, a packet 4, a packet 7, a packet 10, and a packet 11. The packet 11 includes the preset field. After receiving the packet 11, the first device further receives a packet 8.

It can be learned from Case 1 that the third packet may not be a last received packet in the protocol data unit set.

Case 2: A packet that does not belong to the protocol data unit set arrives at the first device earlier than the third packet. The protocol data unit set herein is a protocol data unit set including the third packet.

For example, the first device receives a packet 1, where the packet 1 includes a preset field. After receiving the packet 1, the first device further sequentially receives a packet 2, a packet 3, a packet 5, a packet 6, a packet 7, a packet 4, a packet 9, a packet 10, a packet 8, a packet 15, and a packet 11. The packet 11 includes the preset field. Before receiving the packet 11, the first device further receives the packet 15.

In addition, Case 1 and Case 2 may be further combined, that is, there is a case in which the packet that belongs to the protocol data unit set arrives at the first device later than the third packet, and there is a case in which the packet that does not belong to the protocol data unit set arrives at the first device earlier than the third packet.

Based on Case 1 and Case 2, the first device may further determine the protocol data unit set based on both the SN and the M field of the RTP header. For example, because the second packet includes the M field, the first device may determine a sequence number of a 1^{st} packet in the protocol data unit set based on an SN of an RTP header of the second packet, that is, the SN of the RTP header of the second packet increased by 1. Because the third packet includes the M field, the first device determines a sequence number of the last packet in the protocol data unit set based on an SN of an RTP header of the third packet, that is, the SN of the RTP header of the third packet. Therefore, the first device may determine the sequence number of the 1^{st} packet and the sequence number of the last packet in the protocol data unit set, so that even in a scenario of packet disorder, packets included in the protocol data unit set can be accurately determined.

Therefore, the first device may determine, based on the SN of the third packet and an SN of another packet that has arrived, whether all packets in the protocol data unit set have arrived. That is, whether all packets whose sequence numbers are greater than the SN of the second packet and less than or equal to the SN of the third packet have arrived, or whether all packets after the second packet and before the third packet have arrived. If all the packets whose sequence numbers are greater than the SN of the second packet and less than or equal to the SN of the third packet have arrived, or all the packets after the second packet and before the third packet have arrived, the first device determines that all the packets in the protocol data unit set have arrived. If all the packets whose sequence numbers are greater than the SN of the second packet and less than or equal to the SN of the third packet have not arrived, or all the packets after the second packet and before the third packet have not arrived, the first device further determines that which packet or packets have not arrived, and waits for the packet that has not arrived to arrive at the first device.

For Case 1, the first device receives a packet 1, where the packet 1 includes a preset field. After receiving the packet 1, the first device further sequentially receives a packet 2, a packet 3, a packet 5, a packet 6, a packet 9, a packet 4, a packet 7, a packet 10, and a packet 11. The packet 11 includes the preset field. The first device determines, based on the packet 1, that a sequence number of a 1^{st} packet in the protocol data unit set is 2 (1+1), and determines, based on a sequence number of the packet 11, that the sequence number of the last packet in the protocol data unit set is 11, that is, packets with the sequence number 2 to the sequence number 11 are packets included in the protocol data unit set. Further, the first device determines that the currently received packets do not include a packet 8. Therefore, the first device waits for the packet 8. After the packet 8 arrives, the first device determines that all the packets in the protocol data unit set arrive.

For Case 2, the first device receives a packet 1, where the packet 1 includes a preset field. After receiving the packet 1, the first device further sequentially receives a packet 2, a packet 3, a packet 5, a packet 6, a packet 7, a packet 4, a packet 9, a packet 10, a packet 8, a packet 15, and a packet 11. The packet 11 includes the preset field. The first device determines, based on the packet 1, that a sequence number of a 1^{st} packet in the protocol data unit set is 2 (1+1), and determines, based on a sequence number of the packet 11, that the sequence number of the last packet in the protocol data unit set is 11, that is, packets with the sequence number 2 to the sequence number 11 are packets included in the protocol data unit set. Further, the first device determines that the currently received packets include packets whose sequence numbers are 2 to 11, determines that all the packets in the protocol data unit set arrive, and the first device does not use the packet 15 as a packet in the protocol data unit set.

In an optional implementation of Manner 1, when the received second packet includes the preset field and the received third packet includes the same preset field, the first device determines that the second packet to a last received packet before the third data packet belong to the protocol data unit set.

In an optional implementation of Manner 1, the first device determines that packets that are received between a 1st received packet including the preset field and the packet including the same preset field belong to a same protocol data unit set.

Manner 2: When a received second packet includes a preset field A and a received third packet includes a preset field B, the first device determines that the second packet to the third packet belong to the protocol data unit set. In other words, the protocol data unit set may be determined based on the preset field. The preset field A may also be referred to as a first packet field, and the preset field B may also be referred to as a tail packet field.

For example, the first device receives a packet 1, where the packet 1 includes the preset field A. After receiving the packet 1, the first device further receives a packet 2 to a packet 11, where the packet 11 also includes the preset field B. In this case, the packet 1 to the packet 11 form a protocol data unit set. The packet 2 to the packet 10 do not include the preset field A, and do not include the preset field B, that is, the preset field A and the preset field B corresponding to the packet 2 to the packet 10 are all set to 0.

For example, the preset field A herein may be an "S" field in an RTP header extension field, and the preset field B may be an "E" field in the RTP header extension field. For example, a value of the "S" field in the second packet is "1", and a value of the "E" field in the third packet is "1". In a packet whose sequence number is greater than a sequence number of the second packet and less than a sequence number of the third packet, a value of an "E" field is "0", and a value of an "S" field is "0".

Based on Case 1 and Case 2, because the second packet includes the preset field A, the first device may determine a sequence number of a 1^{st} packet in the protocol data unit set based on an SN of an RTP header of the second packet, that is, the SN of the RTP header of the second packet. Because the third packet includes the preset field B, the first device determines a sequence number of a last packet in the protocol data unit set based on an SN of an RTP header of the third packet, that is, the SN of the RTP header of the third packet. Therefore, the first device may determine the sequence number of the 1^{st} packet and the sequence number of the last packet in the protocol data unit set, so that even in a scenario of packet disorder, packets included in the protocol data unit set can be accurately determined.

Manner 3: The first device determines that packets with a same timestamp belong to a same protocol data unit set.

For example, the first device receives 20 packets, where a 1^{st} packet to a 12^{th} packet include a same timestamp 1, and a 13^{th} packet to a 20^{th} packet include a same timestamp 2. In this case, the packets including the timestamp 1 form one protocol data unit set, and the packets including the timestamp 2 form another protocol data unit set.

For an uplink packet, the timestamp may be generated by the terminal device, and for a downlink packet, the timestamp may be generated by the application server. For example, the timestamp herein may be a "timestamp" field in an RTP header, and the timestamp may indicate time at which a media frame or a media slice is generated or collected.

In addition, in an optional manner of Manner 3, if the first device determines that the plurality of packets include a same preset field, it is determined that the plurality of packets belong to a same protocol data unit set. The preset field may be an identifier of the protocol data unit set, or a value in any form that indicates that the plurality of packets are packets of a same protocol data unit set.

It may be understood that, after the first device discards the packet whose sequence number is greater than the sequence number of the first packet, if the first device determines that a packet whose sequence number is less than the sequence number of the first packet is still not transmitted or is not successfully transmitted, the first device continues to transmit the packet whose sequence number is less than the sequence number of the first packet. That is, the first device discards a packet after the first packet from the protocol data unit set, and continues to transmit a packet before the first packet.

According to the foregoing design, when there is a packet that fails to be transmitted in the protocol data unit set, a packet that is not transmitted in the same protocol data unit set and whose sequence number is greater than a sequence number of the packet that fails to be transmitted is discarded, so that resource overheads caused by transmission and reception of subsequent packets can be avoided.

In addition, it should be noted that, in the process in which the first device transmits the protocol data unit set to the second device, the first device may ensure, in but not limited to the following manners, transmission of packets whose small sequence numbers are ranked ahead:
Manner A: The first device performs transmission in ascending order of sequence numbers of the plurality of packets in the protocol data unit set.

For example, during transmission of the protocol data unit set, within a resource allowed range, the first device ensures transmission of packets whose sequence numbers are ranked ahead, or uses a resource used for transmitting packets whose sequence numbers are ranked behind to transmit the packets whose sequence numbers are ranked ahead.

In a process of transmitting protocol unit data, the first device may preferentially schedule a transmission resource to ensure transmission of the packets whose sequence numbers are ranked ahead. In a transmission resource scheduling process, packet-by-packet scheduling and transmission are performed based on a transmission sequence, and transmission and scheduling of a subsequent packet are not performed again before the packets whose sequence numbers are ranked ahead are successfully transmitted, thereby ensuring that the transmission resource can be used to ensure successful transmission of the packets whose small sequence numbers are ranked ahead. For example, the first device configures corresponding resources for a packet #1, a packet #2, and a packet #3 to perform scheduling and transmission. After the packet #2 fails to be transmitted, a subsequent transmission resource is preferentially used to transmit the packet #2 again, and transmission and scheduling of a subsequent packet are performed again until the packet #2 is successfully transmitted.

Manner B: The first device separately transmits the plurality of packets in the protocol data unit set through two QoS flows, where a priority of one QoS flow is higher than a priority of the other QoS flow, and a sequence number of a packet carried in the higher-priority QoS flow is less than a sequence number of a packet carried in the lower-priority QoS flow.

For example, the first device transmits a first-part packet through the first QoS flow based on a first identifier, and transmits a second-part packet through the second QoS flow based on a second identifier. The protocol data unit set includes the first-part packet and the second-part packet. The first-part packet and the second-part packet do not overlap. A priority of the first-part packet is higher than a priority of the second-part packet, a header of each packet in the first-part packet includes the first identifier, a header of each packet in the second-part packet includes the second identifier, and a ratio of a total quantity of the first-part packet to a total quantity of packets included in the protocol data unit set is greater than or equal to a preset ratio of a transmission success rate.

That the sequence number of the packet carried in the higher-priority QoS flow is less than the sequence number of the packet carried in the lower-priority QoS flow may be understood as that sequence numbers of the first-part packet carried in the first QoS flow are all less than sequence numbers of the second-part packet carried in the second QoS flow, or that a largest sequence number of a packet in the first-part packet carried in the first QoS flow is less than a smallest sequence number of a packet in the second-part packet carried in the second QoS flow, or that the first-part data ranked ahead in the protocol data unit is carried in the first QoS flow, and the second-part data ranked behind in the protocol data unit is carried in the second QoS flow.

The preset ratio of the transmission success rate may be understood as a ratio of a minimum quantity of packets that need to be successfully transmitted in one protocol data unit to a total quantity of packets included in the protocol data unit. The packets that need to be successfully transmitted are packets whose sequence numbers are ranked ahead. Alternatively, sequence numbers of all packets that need to be successfully transmitted are less than sequence numbers of packets other than the packets that need to be successfully transmitted. Alternatively, a largest sequence number of a packet in the packets that need to be successfully transmitted is less than a smallest sequence number of a packet in the packets other than the packets that need to be successfully transmitted. The minimum quantity of packets that need to be successfully transmitted may be determined based on an actual transmission requirement or a decoding requirement.

In addition, in a possible implementation, the first device receives second indication information from the session management network element, where the second indication information indicates the preset ratio of the transmission success rate. For example, the application function network element may send the second indication information to the policy control network element, and the policy control network element sends a PCC rule to the session management network element. The PCC rule includes the second indication information. Alternatively, in another possible implementation, the preset ratio of the transmission success rate is preconfigured on the first device side.

It should be noted that, in Manner B, if the protocol data unit set includes the plurality of uplink packets, and the first device is the terminal device, or the protocol data unit set includes the plurality of downlink packets, and the first device is the user plane network element, the first device may further determine the first-part packet and the second-part packet based on the preset ratio of the transmission success rate, add the first identifier to the header of each packet in the first-part packet, and add the second identifier to the header of each packet in the second-part packet. For example, the first identifier may be an identifier of the first QoS flow, and the second identifier may be an identifier of the second QoS flow.

If the protocol data unit set includes the plurality of downlink packets, and the first device is the user plane network element, the header of each packet is the GTP-U layer header. If the protocol data unit set includes the plurality of uplink packets, and the first device is the terminal device, the header of each packet is a PDCP layer header or an SDAP layer header.

In addition, it should be noted that if the protocol data unit set includes the plurality of uplink packets, the first device is the access network device, and the second device is the user plane network element, the terminal device may further determine the first-part packet and the second-part packet based on the preset ratio of the transmission success rate, add the first identifier to the header of each packet in the first-part packet, and add the second identifier to the header of each packet in the second-part packet.

If the protocol data unit set includes the plurality of downlink packets, the first device is the access network device, and the second device is the terminal device, the user plane network element may further determine the first-part packet and the second-part packet based on the preset ratio of the transmission success rate, add the first identifier to the header of each packet in the first-part packet, and add the second identifier to the header of each packet in the second-part packet. For example, the first identifier may be an identifier of the first QoS flow, and the second identifier may be an identifier of the second QoS flow.

In addition, if the protocol data unit set includes the plurality of uplink packets, when the terminal device adds the first identifier to each packet in the first-part packet and adds the second identifier to each packet in the second-part packet, the first identifier may alternatively be an identifier of a first priority, and the second identifier may alternatively be an identifier of a second priority. The first priority is higher than the second priority. The first device may ensure, based on the identifier of the first priority and the identifier of the second priority, that a packet having the identifier of the first priority is preferentially transmitted.

According to the foregoing design, transmission of packets whose sequence numbers are ranked ahead in the protocol data unit set can be ensured.

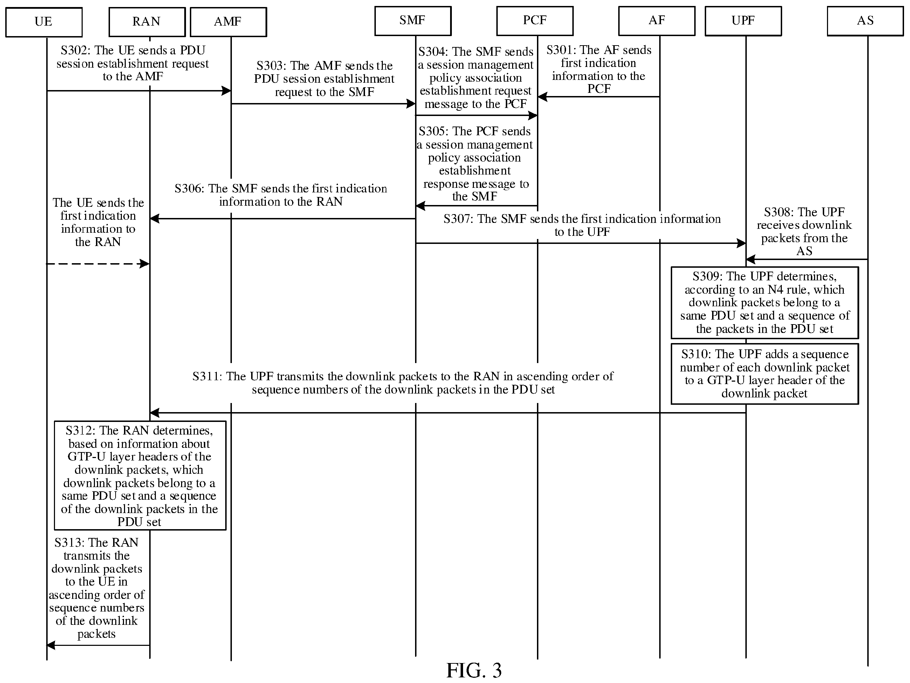

The following describes the method shown in FIG. 3 in detail with reference to specific embodiments.

As shown in FIG. 3, when a PDU set in a data flow of a service used by a terminal device includes a plurality of downlink packets, and a protocol data unit set is transmitted in Manner A, a downlink packet from an application server (application server, AS) first arrives at a UPF side, is sent to a RAN side through an N3 interface, and then is sent to a UE side through a Uu interface. A specific procedure is as follows:
S301: An AF sends first indication information to a PCF.

The first indication information indicates to discard, when a packet that fails to be transmitted is determined in a process of transmitting the PDU set in the data flow of the service used by the terminal device, a packet whose sequence number is greater than a sequence number of the packet that fails to be transmitted in the PDU set.

In addition, the AF further provides service flow description information used for representing characteristic information of a service flow. For example, the service flow description information includes IP quintuple information (a source IP address, a target IP address, a source port number, a target port number, and a transmission protocol) or triplet information (a target IP address, a target port number, and a transmission protocol), an application identifier, and the like. The service flow description information is provided to ensure corresponding processing performed on a target service flow corresponding to the service flow description information.

For example, the AF sends the first indication information to the PCF through a capability exposure interface. If the AF is in a trusted domain, the AF may directly interact with the PCF, that is, invoke a service interface of the PCF, for example, an Npcf_PolicyAuthorization service interface. If the AF is in an untrusted domain, the AF needs to interact with the PCF through an NEF, the AF invokes a service interface of the NEF, for example, an Nnef_AFSessionWithQoS service interface, and the NEF invokes a service interface of the PCF.

S302: The UE sends a PDU session establishment request to an AMF.

When the UE initiates a PDU session establishment or PDU session modification procedure, the UE sends the PDU session establishment request or a PDU session modification request to the AMF. Only a PDU session establishment process is used as an example for description.

Specifically, the UE sends the PDU session modification request or the PDU session establishment request to the RAN side through a NAS message, and the RAN sends the NAS message to the AMF side.

S303: The AMF sends the PDU session establishment request to an SMF.

It may be understood that when the UE initiates the PDU session modification procedure, the AMF sends, to the SMF, the PDU session modification request from the UE side.

S304: The SMF sends a session management policy association establishment request message to the PCF. The session management policy association establishment request message is for requesting a PCC rule.

S305: The PCF sends a session management policy association establishment response message to the SMF. The session management policy association establishment response message includes the PCC rule, and the PCC rule includes the first indication information. Alternatively, the session management policy association establishment response message includes the PCC rule or the first indication information.

It should be noted that if the UE initiates the PDU session establishment procedure, the SMF initiates a session management policy association establishment procedure. If the UE initiates the PDU session modification procedure, the SMF initiates a session management policy association modification procedure. In addition, if S302 is not performed, the PCF may actively initiate the session management policy association modification procedure, and send the PCC rule to the SMF.

S306: The SMF sends the first indication information to the RAN.

For example, the SMF sends the first indication information to the RAN through the AMF.

In addition, the SMF generates corresponding QoS description information (QoS profile) according to the PCC rule from the PCF side, and the SMF sends the QoS Profile to the RAN side, to specify QoS processing for a specified QoS flow.

In addition, the SMF further sends a first notification message to the RAN. The first notification message further indicates the RAN to determine, based on information about GTP-U layer headers of downlink packets, which downlink packets belong to the same PDU set and a sequence of the downlink packets in the PDU set.

In an optional alternative solution, if the SMF does not send the first indication information to the RAN, the UE may further send the first indication information to the RAN. In this case, all the foregoing steps are optional procedures.

S307: The SMF sends the first indication information to the UPF.

For example, the SMF sends the first indication information to the UPF according to the PCC rule from the PCF side. For example, the SMF sends an N4 rule to the UPF. The N4 rule may be sent to the UPF through an N4 session establishment or modification procedure, and the N4 rule may include the first indication information.

In addition, the N4 rule may further include a PDU set identification and marking solution, that is, a method for identifying which downlink packets belong to the same PDU set and a sequence of the downlink packets in the PDU set, and marking GTP-U layer headers of the downlink packets.

It may be understood that for a subsequent PDU session establishment procedure, refer to section 4.3.2.1 in TS 23.502. Details are not described herein again.

When a downlink media service is started, that is, a downlink service data flow of the terminal device starts to be transmitted, for example, for an XR service, after receiving uplink data from the terminal device, the application server correspondingly generates corresponding downlink media data, and sends the downlink media data to the terminal device side over a 5G network. The following S308 to S313 are performed.

S308: The UPF receives downlink packets in the downlink service data flow of the terminal device from the AS. That is, the UPF receives the downlink packets sent by the AS to the UE.

S309: The UPF determines, according to the N4 rule, which downlink packets belong to the same PDU set and a sequence of the packets in the PDU set. That the UPF determines the sequence of the downlink packets in the PDU set includes determining a sequence number of each downlink packet, that is, a PDU sequence number (PDU Sequence Number, PDU SN).

For example, if the downlink media service is transmitted through an RTP, the UPF may determine the following content based on information about the RTP header:
(1) Determine a boundary of the PDU set based on an "M" field in an RTP header of the downlink packet, or determine, based on a timestamp of the RTP header, PDU packets with a same timestamp belong to a same PDU set, or determine an initial packet and an end packet of the PDU set based on an "S" field and an "E" field in an RTP header extension field.
(2) Determine the sequence of the downlink packets in the PDU set based on SNs of RTP headers of the downlink packets, that is, determine the sequence number of each downlink packet.

S310: After completion of identification of the PDU set and the sequence of the downlink packets in the PDU set, the UPF adds the sequence number of each downlink packet to a GTP-U layer header of the downlink packet.

Optionally, the UPF may further map the sequence of the packets in the PDU set to a corresponding transmission priority, and add the corresponding transmission priority to the GTP-U layer header of the downlink packet.

In addition, the UPF may further add identification information of the PDU set to which the downlink packet belongs to the GTP-U layer header.

S311: The UPF transmits the downlink packets to the RAN in ascending order of sequence numbers of the downlink packets in the PDU set.

If it is determined that a downlink packet in a PDU set fails to be transmitted, the UPF directly discards a packet whose sequence number is greater than a sequence number of the downlink packet from the PDU set.

This step is an optional step.

S312: The RAN determines, based on the information about the GTP-U layer headers of the downlink packets, which downlink packets belong to the same PDU set and a sequence of the downlink packets in the PDU set.

S313: The RAN transmits the downlink packets to the UE in ascending order of the sequence numbers of the downlink packets.

If it is determined that a downlink packet in a PDU set fails to be transmitted, the RAN directly discards a packet whose sequence number is greater than a sequence number of the downlink packet from the PDU set.

According to the foregoing design, for the RAN or the UPF, transmission of downlink packets whose sequence numbers are ranked ahead in the protocol data unit set can be ensured, and when a downlink packet that fails to be transmitted in the PDU set is determined, a packet whose sequence number is greater than a sequence number of the downlink packet may be discarded from the PDU set.

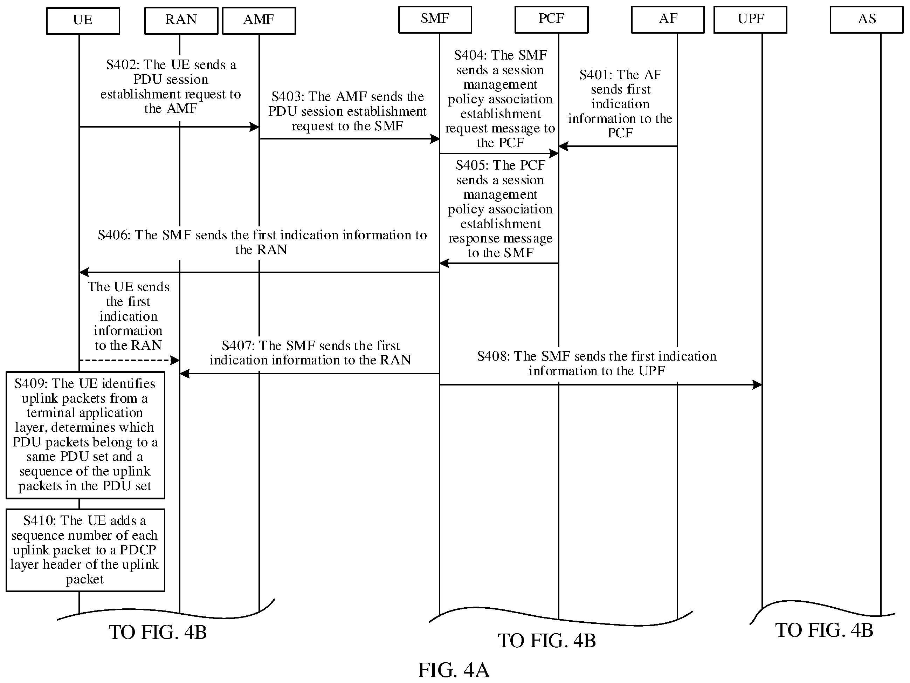

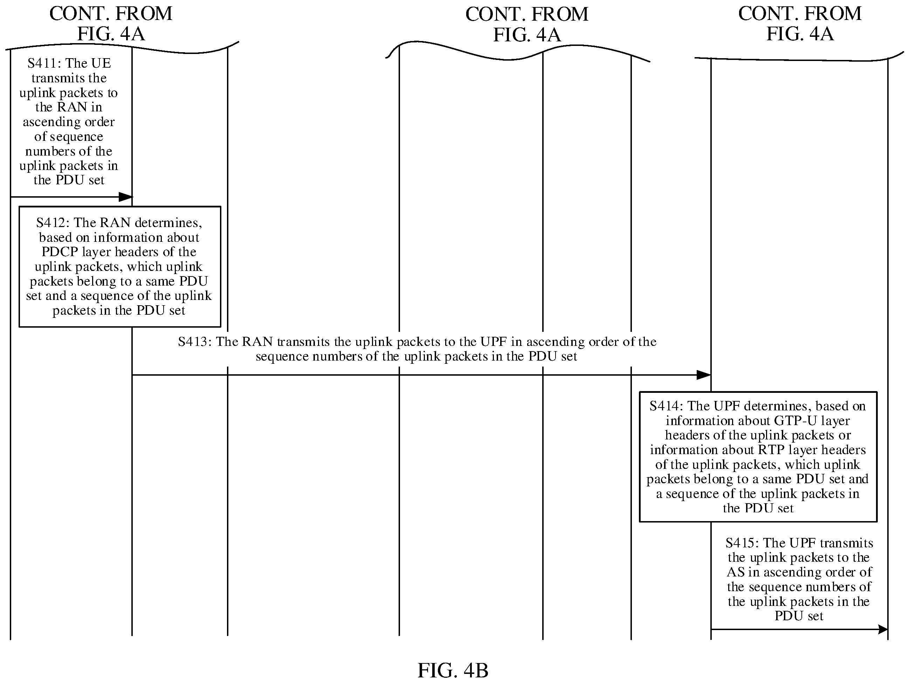

As shown in FIG. 4A and FIG. 4B, when a PDU set in a data flow of a service used by UE includes a plurality of uplink packets, and a protocol data unit set is transmitted in Manner A, an uplink media packet from the UE is sent to a UPF side through a RAN, and is sent by the UPF to an AS side. In other words, after an XR service used by the UE, for example, an AR service, is started, the UE side collects local media data and sends the local media data to the UPF side through the RAN, and then the local media data is correspondingly sent to an application server side. A specific procedure is as follows.

For S401 to S405, refer to S301 to S305.

S406: An SMF sends first indication information to the UE.

Specifically, the SMF sends the first indication information to the UE side through an AMF.

In addition, optionally, the SMF further sends a second notification message to the UE. The second notification message is used for a PDU set identification and marking solution, that is, a method for identifying which uplink packets belong to a same PDU set and a sequence of the uplink packets in the PDU set, and marking PDCP layer headers or SDAP layer headers of the uplink packets.

S407: The SMF sends the first indication information to the RAN.

For example, the SMF sends the first indication information to the RAN through the AMF.

In addition, the SMF generates corresponding QoS description information (QoS profile) according to a PCC rule from a PCF side, and the SMF sends the QoS Profile to the RAN side, to specify QoS processing for a specified QoS flow.

In addition, the SMF further sends a first notification message to the RAN. The first notification message further indicates the RAN to determine, based on information about PDCP layer headers or SDAP layer headers of uplink packets, which uplink packets belong to a same PDU set and a sequence of the uplink packets in the PDU set.

In an optional alternative solution, if the SMF does not send the first indication information to the RAN, the UE may further send the first indication information to the RAN. In this case, all the foregoing steps are optional procedures.

S408: The SMF sends the first indication information to the UPF.

For example, the SMF sends the first indication information to the UPF according to the PCC rule from the PCF side. For example, the SMF sends an N4 rule to the UPF. The N4 rule may be sent to the UPF through an N4 session establishment or modification procedure, and the N4 rule may include the first indication information.

It may be understood that for a subsequent PDU session establishment procedure, refer to section 4.3.2.1 in TS 23.502. Details are not described herein again.

When an uplink media service is started, that is, an uplink data flow of the service used by the terminal device starts to be transmitted, the following S409 to S415 are performed.

S409: The UE identifies uplink packets in an uplink data flow of a service from a terminal application layer, and determines which PDU packets belong to the same PDU set and a sequence of the uplink packets in the PDU set, and that the UE determines the sequence of the uplink packets in the PDU set means determining a sequence number of each uplink packet in the protocol data unit set.

For example, if the uplink media service is transmitted through the RTP, the UE may determine the following content based on information about the RTP header:
(1) Determine a boundary of the PDU set based on an "M" field in an RTP header of the uplink packet, or determine, based on timestamps of RTP headers, uplink packets with a same timestamp belong to a same PDU set, or determine an initial packet and an end packet of the PDU set based on an "S" field and an "E" field in an RTP header extension field.
(2) Determine the sequence of the uplink packets in the PDU set based on sequence numbers of RTP headers of the uplink packets, that is, determine a sequence number of each uplink packet; or determine the sequence of the uplink packets in the PDU set based on a sequence of sending or generating packets by an upper layer.

S410: After completion of identification of the PDU set and the sequence of the uplink packets in the PDU set, the UE adds the sequence number of each uplink packet to a PDCP layer header or an SDAP layer header of the uplink packet.

Optionally, the UE may further map the sequence of the uplink packets in the PDU set to a corresponding transmission priority, and add the corresponding transmission priority to the uplink packets, for example, the PDCP layer header or the SDAP layer header of the packet.

S411: The UE transmits the uplink packets to the RAN in ascending order of sequence numbers of the uplink packets in the PDU set.

If it is determined that an uplink packet in a PDU set fails to be transmitted, the UE directly discards a packet whose sequence number is greater than a sequence number of the uplink packet from the PDU set, that is, discards another packet after the uplink packet from the PDU set.

S412: The RAN determines, based on the information about the PDCP layer headers of the uplink packets, which uplink packets belong to the same PDU set and a sequence of the uplink packets in the PDU set.

S413: The RAN transmits the uplink packets to the UPF in ascending order of the sequence numbers of the uplink packets in the PDU set.

If it is determined that an uplink packet in a PDU set fails to be transmitted, the RAN directly discards a packet whose sequence number is greater than a sequence number of the uplink packet from the PDU set.

Optionally, the RAN adds corresponding information to a GTP-U layer of the uplink packet based on the sequence numbers of the uplink packets in the PDU set and identification information of the PDU set, to ensure that the UPF can identify a corresponding PDU set and a sequence of PDU packets in the PDU set.

S414: The UPF determines, based on information about GTP-U layer headers of the uplink packets or information about RTP layer headers of the uplink packets, which uplink packets belong to the same PDU set and a sequence of the uplink packets in the PDU set.

S415: The UPF transmits the uplink packets to the AS in ascending order of the sequence numbers of the uplink packets in the PDU set.

If it is determined that an uplink packet in a PDU set fails to be transmitted, the UPF directly discards a packet whose sequence number is greater than a sequence number of the uplink packet from the PDU set.

This step is an optional step.

According to the foregoing design, for the UE, the RAN, or the UPF, transmission of uplink packets whose sequence numbers are ranked ahead in the protocol data unit set can be ensured, and when an uplink packet that fails to be transmitted in the PDU set is determined, a packet whose sequence number is greater than a sequence number of the uplink packet may be discarded from the PDU set, that is, a packet after the packet that fails to be transmitted may be discarded from the PDU set.

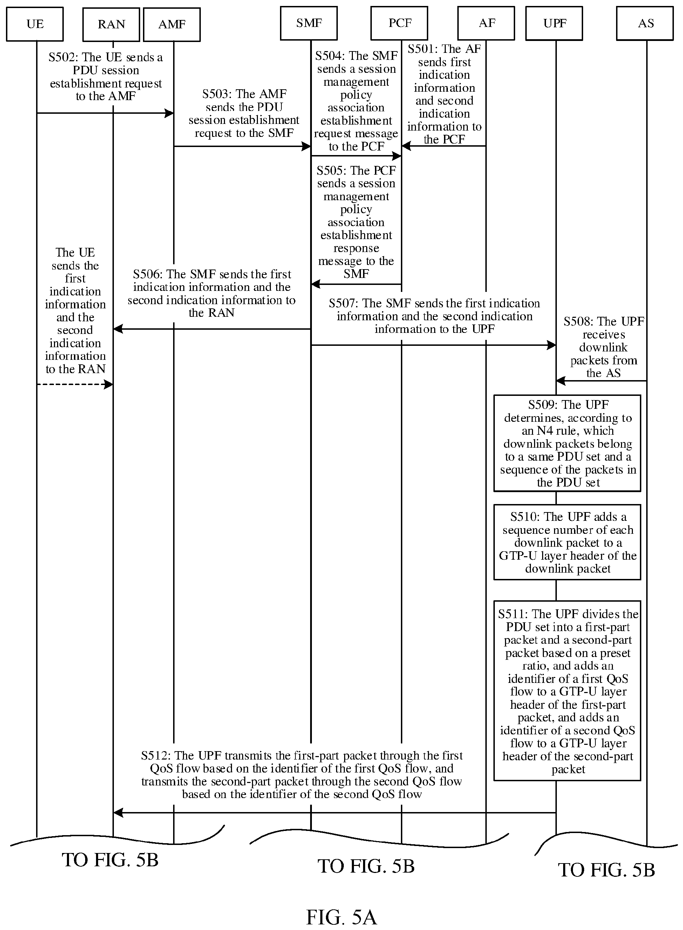

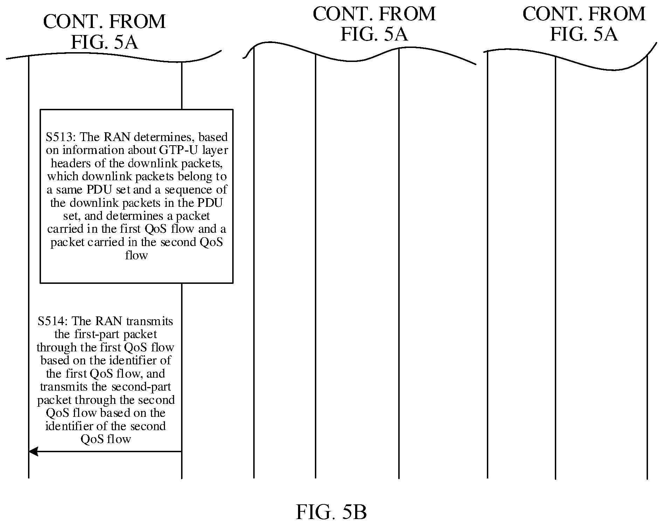

As shown in FIG. 5A and FIG. 5B, when a PDU set in a data flow of a service used by a terminal device includes a plurality of downlink packets, and a protocol data unit set is transmitted in Manner B, a downlink packet from an AS first arrives at a UPF side, is sent to a RAN side through an N3 interface, and then is sent to a UE side through a Uu interface. A specific procedure is as follows.

S501: An AF sends first indication information and second indication information to a PCF.

The second indication information indicates a preset ratio of a transmission success rate.

In addition, the AF further provides service flow description information used for representing characteristic information of a service flow. The service flow description information includes IP quintuple information (a source IP address, a target IP address, a source port number, a target port number, and a transmission protocol) or triplet information (a target IP address, a target port number, and a transmission protocol), an application identifier, and the like. The service flow description information is provided to ensure corresponding processing performed on a target service flow corresponding to the service flow description information.

For example, the AF sends the first indication information to the PCF through a capability exposure interface. If the AF is in a trusted domain, the AF may directly interact with the PCF, that is, invoke a service interface of the PCF, for example, an Npcf_PolicyAuthorization service interface. If the AF is in an untrusted domain, the AF needs to interact with the PCF through an NEF, the AF invokes a service interface of the NEF, for example, an Nnef_AFSessionWithQoS service interface, and the NEF invokes a service interface of the PCF.

S502: The UE sends a PDU session establishment request message to an AMF.

When the UE initiates a PDU session establishment or PDU session modification procedure, the UE sends the PDU session establishment request message or a PDU session modification request message to the AMF. Only a PDU session establishment process is used as an example for description.

For example, the UE sends the PDU session establishment request message or the session modification request message to the RAN side through a NAS message, and then the RAN sends the NAS message to the AMF side.

S503: The AMF sends, to the SMF, the PDU session establishment request from the UE side.

It may be understood that when the UE initiates the PDU session modification procedure, the AMF sends, to the SMF, the PDU session modification request from the UE side.

S504: The SMF sends a session management policy association establishment request message to the PCF. The session management policy association establishment request message is for requesting a PCC rule.

S505: The PCF sends a session management policy association establishment response message to the SMF.

For example, the session management policy association establishment response message includes the first indication information and the second indication information. Specifically, the following several scenarios may be included:
(1) The session management policy association establishment response message includes the PCC rule, and the PCC rule includes the first indication information and the second indication information.
(2) The session management policy association establishment response message includes the PCC rule, the first indication information, and the second indication information.
(3) The session management policy association establishment response message includes the PCC rule and the first indication information, and the PCC rule includes the second indication information.
(4) The session management policy association establishment response message includes the PCC rule and the second indication information, and the PCC rule includes the first indication information.

In addition, the second indication information may be alternatively preconfigured on the UE or the UPF in a preconfiguration manner. In this case, the session management policy association establishment response message includes only the first indication information, and the first indication information may be within the PCC rule or outside the PCC rule. This is not limited in this application. The following uses only an example in which the session management policy association establishment response message includes the first indication information and the second indication information for description. To be specific, the session management policy association establishment response message may carry the first indication information and the second indication information in any one of the foregoing manners (1) to (4).

It should be noted that, if the UE initiates the PDU session establishment procedure, the SMF initiates a session management policy association establishment procedure. If the UE initiates the PDU session modification procedure, the SMF initiates a session management policy association modification procedure. In addition, if S502 is not performed, the PCF may actively initiate the session management policy association modification procedure, and send the PCC rule to the SMF.

Optionally, the PCC rule may further indicate to create two QoS flows, and the two QoS flows respectively carry a first-part packet and a second-part packet of each PDU set. The first-part packet is carried in a first QoS flow, and the second-part packet is carried in a second QoS flow. A priority of the first QoS flow is higher than a priority of the second QoS flow. The first-part packet and the second-part packet are determined based on the preset ratio of the transmission success rate. The first-part packet is a part of packets that account for the preset ratio of the transmission success rate and ranked ahead in the PDU set, and the second-part packet is other packets in the PDU set.

S506: The SMF sends the first indication information and the second indication information to the RAN.

For example, the SMF sends the first indication information and the second indication information to the RAN through the AMF.

Optionally, the SMF may further generate configuration information of the two QoS flows according to the PCC rule, and send the configuration information of the two QoS flows to the RAN.

In addition, the SMF further sends a first notification message to the RAN. The first notification message further indicates the RAN to determine, based on information about GTP-U layer headers of downlink packets, which downlink packets belong to the same PDU set and a sequence of the downlink packets in the PDU set, and determine a packet carried in the first QoS flow and a packet carried in the second QoS flow.

In an optional alternative solution, if the SMF does not send the first indication information and the second indication information to the RAN, the UE may further send the first indication information and the second indication information to the RAN.

S507: The SMF sends the first indication information and the second indication information to the UPF.

For example, the SMF sends the first indication information and/or the second indication information to the UPF according to the PCC rule from the PCF side. For example, the SMF sends an N4 rule to the UPF. The N4 rule may be sent to the UPF through an N4 session establishment or modification procedure. The N4 rule may include the first indication information and the second indication information.

Optionally, the N4 rule may further include: dividing the PDU set into the first-part packet and the second-part packet based on the preset ratio of the transmission success rate indicated by the second indication information, adding an identifier of the first QoS flow to GTP-U layer headers of the first-part packet, and adding an identifier of the second QoS flow to GTP-U layer headers of the second-part packet.

In addition, the N4 rule may further include a PDU set identification and marking solution, that is, a method for identifying which downlink packets belong to the same PDU set and a sequence of the downlink packets in the PDU set, and marking GTP-U layer headers of the downlink packets.

It may be understood that for a subsequent PDU session establishment procedure, refer to section 4.3.2.1 in TS 23.502. Details are not described herein again.

When a downlink media service is started, that is, a downlink service data flow of the terminal device starts to be transmitted, for example, for an XR service, after receiving uplink data from the terminal device, the application server correspondingly generates corresponding downlink media data, and sends the downlink media data to the terminal device side over a 5G network. The following S508 to S514 are performed.

S508: The UPF receives downlink packets in a downlink service data flow sent by the AS to the UE side.

S509: The UPF determines, according to the N4 rule, which downlink packets belong to the same PDU set and a sequence of the packets in the PDU set, and that the UPF determines the sequence of the downlink packets in the PDU set includes determining a sequence number of each downlink packet.

For details, refer to S309.

S510: After completion of identification of the PDU set and the sequence of the downlink packets in the PDU set, the UPF adds the sequence number of each downlink packet to a GTP-U layer header of the downlink packet.

Optionally, the UPF may further map the sequence of the packets in the PDU set to a corresponding transmission priority, and add the corresponding transmission priority to the GTP-U layer header of the downlink packet.

S511: The UPF divides the PDU set into the first-part packet and the second-part packet based on the preset ratio of the transmission success rate, where the first-part packet is packets that account for the preset ratio and ranked ahead in the PDU set, and the second-part packet is other subsequent packets; and the UPF adds the identifier of the first QoS flow to the GTP-U layer header of the first-part packet, and adds the identifier of the second QoS flow to the GTP-U layer header of the second-part packet.

S512: The UPF transmits the first-part packet through the first QoS flow based on the identifier of the first QoS flow, and transmits the second-part packet through the second QoS flow based on the identifier of the second QoS flow.

If it is determined that a downlink packet in a PDU set fails to be transmitted, the UPF directly discards a packet whose sequence number is greater than a sequence number of the downlink packet from the PDU set, that is, the UPF directly discards another packet after the packet.

S513: The RAN determines, based on the information about the GTP-U layer headers of the downlink packets, which downlink packets belong to the same PDU set and a sequence of the downlink packets in the PDU set, and determines a packet carried in the first QoS flow and a packet carried in the second QoS flow.

S514: The RAN transmits the first-part packet through the first QoS flow based on the identifier of the first QoS flow, and transmits the second-part packet through the second QoS flow based on the identifier of the second QoS flow.

If it is determined that a downlink packet in a PDU set fails to be transmitted, the RAN directly discards a packet whose sequence number is greater than a sequence number of the downlink packet from the PDU set. In other words, the RAN performs collaborative processing on the same PDU set in the two QoS flows, and after finding that a downlink packet fails to be transmitted, the RAN discards a packet whose sequence number is greater than a sequence number of the downlink packet from the PDU set.

According to the foregoing design, for the RAN or the UPF, transmission of downlink packets whose sequence numbers are ranked ahead in the protocol data unit set can be ensured, and when a downlink packet that fails to be transmitted in the PDU set is determined, a packet whose sequence number is greater than a sequence number of the downlink packet may be discarded from the PDU set.

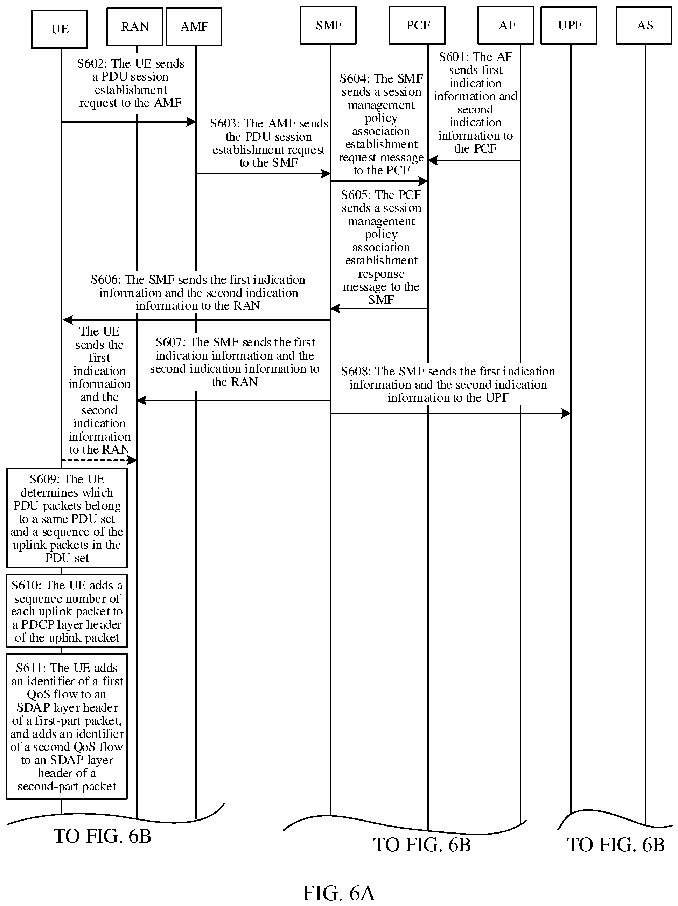

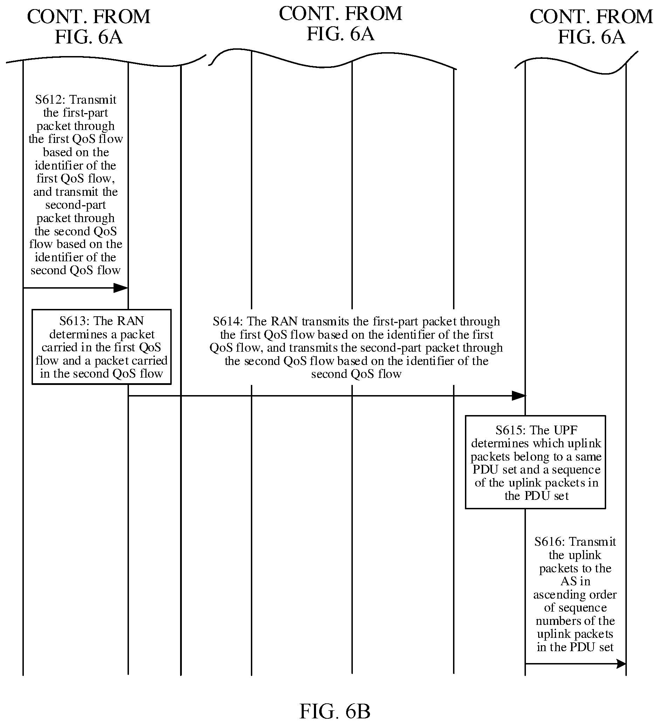

As shown in FIG. 6A and FIG. 6B, when a PDU set in a data flow of a service used by UE includes a plurality of uplink packets, and a protocol data unit set is transmitted in Manner B, an uplink media packet from the UE is sent to a UPF side through a RAN, and is sent by the UPF to an AS side. In other words, after an XR service used by the UE, for example, an AR service, is started, the UE side collects local media data and sends the local media data to the UPF side through the RAN, and then the local media data is correspondingly sent to an application server side. A specific procedure is as follows.

For S601 to S605, refer to S501 to S505.

S606: An SMF sends first indication information and second indication information to the UE.

Optionally, the SMF further sends two QoS rules to the UE. Two QoS flows corresponding to the two QoS rules respectively carry a first-part packet and a second-part packet of each PDU set. The first-part packet is carried in the first QoS flow, and the second-part packet is carried in the second QoS flow. A priority of the first QoS flow is higher than a priority of the second QoS flow. The first-part packet and the second-part packet are determined based on a preset ratio of a transmission success rate, that is, the first-part packet is packets that account for the preset ratio and ranked ahead in the PDU set, and the second-part packet is subsequent packets in the PDU set.

In addition, the SMF further sends a second notification message to the UE. The second notification message is used for a PDU set identification and marking solution, that is, a method for identifying which uplink packets belong to the same PDU set and a sequence of the uplink packets in the PDU set, and marking PDCP layer headers of the uplink packets; and is used for dividing the PDU set into the first-part packet and the second-part packet based on the preset ratio of the transmission success rate indicated by the second indication information, adding an identifier of the first QoS flow to SDAP layer headers of the first-part packet, and adding an identifier of the second QoS flow to SDAP layer headers of the second-part packet.

S607: The SMF sends the first indication information and the second indication information to the RAN.

For example, the SMF sends the first indication information and the second indication information to the RAN through an AMF.

In addition, the SMF further sends a first notification message to the RAN. The first notification message further indicates the RAN to determine, based on information about PDCP layer headers or SDAP layer headers of uplink packets, which uplink packets belong to the same PDU set and a sequence of the uplink packets in the PDU set, and determine a packet carried in the first QoS flow and a packet carried in the second QoS flow.

In an optional alternative solution, if the SMF does not send the first indication information to the RAN, the UE may further send the first indication information and the second indication information to the RAN.

S608: The SMF sends the first indication information and the second indication information to the UPF.

For example, the SMF sends the first indication information and the second indication information to the UPF according to a PCC rule from a PCF side. For example, the SMF sends an N4 rule to the UPF. The N4 rule may be sent to the UPF through an N4 session establishment or modification procedure. The N4 rule may include the first indication information and the second indication information.

It may be understood that for a subsequent PDU session establishment procedure, refer to section 4.3.2.1 in TS 23.502. Details are not described herein again.

When an uplink media service is started, that is, an uplink service data flow of the terminal device starts to be transmitted, for example, after the XR service is started, the terminal device sends uplink data from the XR service to the application server side over a 5G network. S609 to S616 are performed.

S609: The UE identifies uplink packets in the uplink service data flow of the terminal device from a terminal application layer, and determines which PDU packets belong to the same PDU set and a sequence of the uplink packets in the PDU set, and that the UE determines the sequence of the uplink packets in the PDU set means determining a sequence number of each uplink packet.

For details, refer to step 409.

S610: After completion of identification of the PDU set and the sequence of the uplink packets in the PDU set, the UE adds the sequence number of each uplink packet to a PDCP layer header of the uplink packet.

Optionally, the UE may further map the sequence of the uplink packets in the PDU set to a corresponding transmission priority, and add the corresponding transmission priority to the PDCP layer header of the uplink packet.

S611: The UE divides the PDU set into the first-part packet and the second-part packet based on the preset ratio of the transmission success rate, adds the identifier of the first QoS flow to the SDAP layer headers of the first-part packet, and adds the identifier of the second QoS flow to the SDAP layer headers of the second-part packet. That is, the first-part packet is packets that account for the preset ratio and ranked ahead in the PDU set, and the second-part packet is subsequent packets in the PDU set.

S612: The UE transmits the first-part packet through the first QoS flow based on the identifier of the first QoS flow, and transmits the second-part packet through the second QoS flow based on the identifier of the second QoS flow.

If it is determined that an uplink packet in a PDU set fails to be transmitted, the UE directly discards a packet whose sequence number is greater than a sequence number of the uplink packet from the PDU set, that is, discards another packet after the packet that fails to be transmitted in the PDU set.

S613: The RAN determines, based on the information about the PDCP layer headers of the uplink packets, which uplink packets belong to the same PDU set and a sequence of the uplink packets in the PDU set, and determines, based on the information about the SDAP layer headers of the uplink packets, a packet carried in the first QoS flow and a packet carried in the second QoS flow.

S614: The RAN transmits the first-part packet through the first QoS flow based on the identifier of the first QoS flow, and transmits the second-part packet through the second QoS flow based on the identifier of the second QoS flow.

If it is determined that an uplink packet in a PDU set fails to be transmitted, the RAN directly discards a packet whose sequence number is greater than a sequence number of the uplink packet from the PDU set.

Optionally, the RAN adds corresponding information to a GTP-U layer of the uplink packet based on the sequence numbers of the uplink packets in the PDU set and identification information of the PDU set, to ensure that the UPF can identify a corresponding PDU set and a sequence of PDU packets in the PDU set.

S615: The UPF determines, based on information about GTP-U layer headers of the uplink packets or information about RTP layer headers of the uplink packets, which uplink packets belong to the same PDU set and a sequence of the uplink packets in the PDU set.

S616: Optionally, the UPF transmits the uplink packets to the AS in ascending order of the sequence numbers of the uplink packets in the PDU set.

If it is determined that an uplink packet in a PDU set fails to be transmitted, the UPF directly discards a packet whose sequence number is greater than a sequence number of the uplink packet from the PDU set.

According to the foregoing design, for the UE, the RAN, or the UPF, transmission of uplink packets whose sequence numbers are ranked ahead in the protocol data unit set can be ensured, and when an uplink packet that fails to be transmitted in the PDU set is determined, a packet whose sequence number is greater than a sequence number of the uplink packet may be discarded from the PDU set.

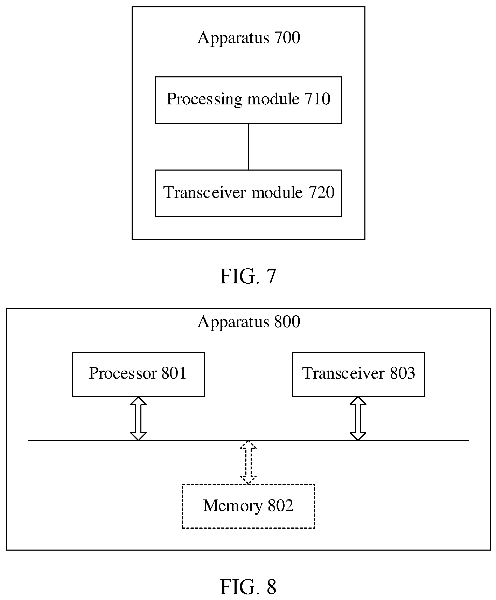

FIG. 7 is a possible example block diagram of a communication apparatus according to an embodiment of this application. The apparatus 700 includes a transceiver module 720 and a processing module 710. The transceiver module 720 may include a receiving unit and a sending unit. The processing module 710 is configured to control and manage an action of the apparatus 700. The transceiver module 720 is configured to support the apparatus 700 in communicating with another network entity. Optionally, the apparatus 700 may further include a storage unit. The storage unit is configured to store program code and data of the apparatus 700.

Optionally, each module in the apparatus 700 may be implemented by software.

Optionally, the processing module 710 may be a processor or a controller, for example, may be a general-purpose central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The controller/processor may implement or execute various example logical blocks, modules, and circuits described with reference to content disclosed in embodiments of this application. The processor may be a combination of processors implementing a computing function, for example, a combination of one or more microprocessors, or a combination of the DSP and a microprocessor. The transceiver module 720 may be a communication interface, a transceiver, a transceiver circuit, or the like. The communication interface is a general term. During specific implementation, the communication interface may include a plurality of interfaces. The storage unit may be a memory.

When the apparatus 700 is a first device or a chip in a first device, the processing module 710 in the apparatus 700 may support the apparatus 700 in performing the actions of the first device in the foregoing method examples, for example, may support the apparatus 700 in performing step 200 or step 210 in FIG. 2.

The transceiver module 720 may support the apparatus 700 in communicating with a terminal device.

For example, the processing module 710 invokes the transceiver module 720 to:
in a process in which a protocol data unit set of a service used on a terminal device is transmitted to a second device, determine that a first packet in the protocol data unit set fails to be transmitted; and discard a packet whose sequence number is greater than a sequence number of the first packet in the protocol data unit set.

In a possible design, the protocol data unit set includes a plurality of uplink packets, and the first device is the terminal device; or the protocol data unit set includes a plurality of downlink packets, and the first device is a user plane network element.

The processing module 710 is further configured to: determine a plurality of packets that belong to the protocol data unit set; and add a sequence number of each packet in the plurality of packets to a header of the corresponding packet.

In a possible design, the processing module 710 is further configured to: when a received second packet includes a preset field and a received third packet includes the preset field, determine that a packet received after the second packet to the third packet belong to the protocol data unit set; or
determine that packets with a same timestamp belong to a same protocol data unit set.

In a possible design, the transceiver module 720 is configured to receive first indication information from a session management network element, where the first indication information indicates to discard, when a packet that fails to be transmitted is determined in the process of transmitting the protocol data unit set, a packet whose sequence number is greater than a sequence number of the packet that fails to be transmitted in the protocol data unit set.

In a possible design, the processing module 710 is further configured to perform transmission in ascending order of sequence numbers of the plurality of packets in the protocol data unit set.

In a possible design, the protocol data unit set includes a first-part packet and a second-part packet, the first-part packet and the second-part packet do not overlap, a priority of the first-part packet is higher than a priority of the second-part packet, a header of each packet in the first-part packet includes a first identifier, a header of each packet in the second-part packet includes a second identifier, and a ratio of a total quantity of the first-part packet to a total quantity of packets included in the protocol data unit set is greater than or equal to a preset ratio of a transmission success rate.

The processing module 710 is further configured to: before it is determined that the first packet in the protocol data unit set fails to be transmitted, transmit the first-part packet through a first QoS flow based on the first identifier, and transmit the second-part packet through a second QoS flow based on the second identifier.

In a possible design, the transceiver module 720 is configured to receive second indication information from a session management network element, where the second indication information indicates a preset ratio of the transmission success rate.

In a possible design, the protocol data unit set includes the plurality of uplink packets, and the first device is the terminal device; or the protocol data unit set includes the plurality of downlink packets, and the first device is the user plane network element.

The processing module 710 is further configured to: determine the first-part packet and the second-part packet based on the preset ratio of the transmission success rate; add the first identifier to the header of each packet in the first-part packet; and add the second identifier to the header of each packet in the second-part packet.

In a possible design, the first identifier is an identifier of the first QoS flow, and the second identifier is an identifier of the second QoS flow.

In a possible design, if the protocol data unit set includes the plurality of downlink packets, and the first device is the user plane network element, the header of each packet is a general packet radio service tunneling protocol-user plane GTP-U layer header.

If the protocol data unit set includes the plurality of uplink packets, and the first device is the terminal device, the header of each packet is a packet data convergence protocol PDCP layer header or a service data adaptation protocol SDAP layer header.

In a possible design, the processing module 710 is further configured to: after the packet whose sequence number is greater than the sequence number of the first packet in the protocol data unit set is discarded, continue to transmit a packet whose sequence number is less than the sequence number of the first packet.

In a possible design, the processing module 710 is further configured to: when it is determined that the first packet in the protocol data unit set fails to be transmitted, determine that a quantity of retransmissions of the first packet exceeds a retransmission threshold; or determine that transmission duration of the first packet exceeds a transmission duration threshold.

It should be understood that the apparatus 700 according to this embodiment of this application may correspond to the first device in the foregoing method embodiments, and operations and/or functions of the modules in the apparatus 700 are separately configured to implement corresponding steps of the method performed by the first device in the foregoing method embodiments. Therefore, beneficial effects in the foregoing method embodiments can also be implemented. For brevity, details are not described herein again.

FIG. 8 is a diagram of a structure of a communication apparatus 800 according to an embodiment of this application. As shown in FIG. 8, the apparatus 800 includes a processor 801.

When the apparatus 800 is a first device or a chip in a first device, in a possible implementation, the processor 801 is configured to invoke an interface to perform the following operations:
In a process in which a protocol data unit set of a service used on a terminal device is transmitted to a second device, determine that a first packet in the protocol data unit set fails to be transmitted; and discard a packet whose sequence number is greater than a sequence number of the first packet in the protocol data unit set.

It should be understood that the apparatus 800 may alternatively be configured to perform other steps and/or operations on a first device side in the foregoing embodiments. For brevity, details are not described herein again.

It should be understood that the processor 801 may invoke the interface to perform the foregoing receiving/sending operation. The invoked interface may be a logical interface or a physical interface. This is not limited. Optionally, the physical interface may be implemented by using a transceiver. Optionally, the apparatus 800 further includes the transceiver 803.

Optionally, the apparatus 800 further includes a memory 802, and the memory 802 may store program code in the foregoing method embodiments, so that the processor 801 invokes the program code.

Specifically, if the apparatus 800 includes the processor 801, the memory 802, and the transceiver 803, the processor 801, the memory 802, and the transceiver 803 communicate with each other through an inner connection path, to transmit a control signal and/or a data signal. In a possible design, the processor 801, the memory 802, and the transceiver 803 may be implemented by a chip. The processor 801, the memory 802, and the transceiver 803 may be implemented in a same chip, or may be separately implemented in different chips, or functions of any two of the processor 801, the memory 802, and the transceiver 803 are implemented in one chip. The memory 802 may store the program code, and the processor 801 invokes the program code stored in the memory 802, to implement a corresponding function of the apparatus 800.

The method disclosed in the foregoing embodiments of this application may be applied to the processor, or may be implemented by the processor. The processor may be an integrated circuit chip and has a signal processing capability. In an implementation process, steps in the foregoing method embodiments can be implemented by using a hardware integrated logical circuit in the processor, or by using instructions in a form of software. The foregoing processor may be a general purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware assembly, or may be a system on chip (system on chip, SoC), or may be a central processing unit (central processor unit, CPU), or may be a network processor (network processor, NP), or may be a digital signal processor (digital signal processor, DSP), or may be a micro control unit (micro controller unit, MCU), or may be a programmable logic device (programmable logic device, PLD) or another integrated chip. It may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, like a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these and any another suitable type of memories.

It should be understood that in embodiments of this application, numbers "first", "second", and the like are merely used to distinguish between different objects, for example, to distinguish between different parameter information or messages, and do not constitute a limitation on the scope of embodiments of this application. This is not limited in embodiments of this application.

It should be further understood that sequence numbers of the foregoing processes do not mean execution sequences in embodiments of this application. The execution sequences of the processes should be determined based on functions and internal logic of the processes. Various numerical numbers or sequence numbers in the foregoing processes are merely distinguished for ease of description, and should not constitute any limitation on the implementation processes of embodiments of this application.

It should also be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

Unless otherwise specified, an expression used in this application similar to an expression that "an item includes one or more of the following: A, B, and C" usually means that the item may be any one of the following: A; B; C; A and B; A and C; B and C; A, B, and C; A and A; A, A, and A; A, A, and B; A, A, and C; A, B, and B; A, C, and C; B and B; B, B, and B; B, B, and C; C and C; C, C, and C; and another combination of A, B, and C. In the foregoing descriptions, three elements A, B, and C are used as an example to describe an optional case of the item. When an expression is "the item includes at least one of the following: A, B, ..., and X", in other words, more elements are included in the expression, a case to which the item is applicable may also be obtained according to the foregoing rule.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely an example. For example, the unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in the form of a software product. The computer software product is stored in a storage medium, and includes several instructions for indicating a computing device (which may be a personal computer, a server, or a network device) to perform all or a part of the steps of the methods described in embodiments of this application. The foregoing storage medium includes any medium that can store program code, such as a USB flash drive, a removable hard disk, a read-only memory ROM, a random access memory RAM, a magnetic disk, or an optical disc.

## Claims

1. A protocol data unit set transmission method, wherein the method comprises:
in a process in which a first device transmits a protocol data unit set of a service used on a terminal device to a second device, determining, by the first device, that a first packet in the protocol data unit set fails to be transmitted; and
discarding, by the first device, a packet whose sequence number is greater than a sequence number of the first packet in the protocol data unit set.

2. The method according to claim 1, wherein the protocol data unit set comprises a plurality of uplink packets, and the first device is the terminal device; or the protocol data unit set comprises a plurality of downlink packets, and the first device is a user plane network element; and
the method further comprises:
determining, by the first device, a plurality of packets that belong to the protocol data unit set; and
adding, by the first device, a sequence number of each packet in the plurality of packets to a header of the corresponding packet.

3. The method according to claim 2, wherein the determining, by the first device, a plurality of packets that belong to the protocol data unit set comprises:
when a received second packet comprises a preset field and a received third packet comprises the preset field, determining, by the first device, that a packet received after the second packet to the third packet belong to the protocol data unit set; or
determining, by the first device, that packets with a same timestamp belong to a same protocol data unit set.

4. The method according to any one of claims 1 to 3, further comprising:
receiving, by the first device, first indication information from a session management network element, wherein the first indication information indicates to discard, when a packet that fails to be transmitted is determined in the process of transmitting the protocol data unit set, a packet whose sequence number is greater than a sequence number of the packet that fails to be transmitted in the protocol data unit set.

5. The method according to any one of claims 1 to 4, further comprising:
performing, by the first device, transmission in ascending order of sequence numbers of the plurality of packets in the protocol data unit set.

6. The method according to any one of claims 1 to 4, wherein the protocol data unit set comprises a first-part packet and a second-part packet, the first-part packet and the second-part packet do not overlap, a priority of the first-part packet is higher than a priority of the second-part packet, a header of each packet in the first-part packet comprises a first identifier, a header of each packet in the second-part packet comprises a second identifier, and a ratio of a total quantity of the first-part packet to a total quantity of packets comprised in the protocol data unit set is greater than or equal to a preset ratio of a transmission success rate; and
before the determining, by the first device, that a first packet in the protocol data unit set fails to be transmitted, the method further comprises:
transmitting, by the first device, the first-part packet through a first QoS flow based on the first identifier, and transmitting the second-part packet through a second QoS flow based on the second identifier.

7. The method according to claim 6, further comprising:
receiving, by the first device, second indication information from the session management network element, wherein the second indication information indicates the preset ratio of the transmission success rate.

8. The method according to claim 6 or 7, wherein the protocol data unit set comprises the plurality of uplink packets, and the first device is the terminal device; or the protocol data unit set comprises the plurality of downlink packets, and the first device is the user plane network element; and
the method further comprises:
determining, by the first device, the first-part packet and the second-part packet based on the preset ratio of the transmission success rate; adding the first identifier to the header of each packet in the first-part packet; and adding the second identifier to the header of each packet in the second-part packet.

9. The method according to any one of claims 6 to 8, wherein the first identifier is an identifier of the first QoS flow, and the second identifier is an identifier of the second QoS flow.

10. The method according to any one of claims 6 to 9, wherein if the protocol data unit set comprises the plurality of downlink packets, and the first device is the user plane network element, the header of each packet is a general packet radio service tunneling protocol-user plane GTP-U layer header; or
if the protocol data unit set comprises the plurality of uplink packets, and the first device is the terminal device, the header of each packet is a packet data convergence protocol PDCP layer header or a service data adaptation protocol SDAP layer header.

11. The method according to any one of claims 1 to 10, further comprising:
after discarding the packet whose sequence number is greater than the sequence number of the first packet in the protocol data unit set, continuing to transmit, by the first device, a packet whose sequence number is less than the sequence number of the first packet.

12. The method according to any one of claims 1 to 11, wherein the determining, by the first device, that a first packet in the protocol data unit set fails to be transmitted comprises:
determining, by the first device, that a quantity of retransmissions of the first packet exceeds a retransmission threshold; or
determining, by the first device, that transmission duration of the first packet exceeds a transmission duration threshold.

13. A protocol data unit set transmission method, wherein the method comprises:
receiving, by a session management network element, first indication information from a policy control network element, wherein the first indication information indicates to discard, when a packet that fails to be transmitted is determined in a process of transmitting a protocol data unit set, a packet whose sequence number is greater than a sequence number of the packet that fails to be transmitted in the protocol data unit set; and
sending, by the session management network element, the first indication information to a first device.

14. The method according to claim 13, further comprising:
receiving, by the session management network element, second indication information from the policy control network element, wherein the second indication information indicates a preset ratio of a transmission success rate, and the preset ratio of the transmission success rate is a minimum ratio of a total quantity of packets that need to be successfully transmitted before presence of the packet that fails to be transmitted in the protocol data unit set to a total quantity of packets comprised in the protocol data unit set; and
sending, by the session management network element, the second indication information to the first device.

15. A protocol data unit set transmission method, wherein the method comprises:
receiving, by a policy control network element, first indication information from an application function network element, wherein the first indication information indicates to discard, when a packet that fails to be transmitted is determined in a process of transmitting a protocol data unit set, a packet whose sequence number is greater than a sequence number of the packet that fails to be transmitted in the protocol data unit set; and
sending, by the policy control network element, the first indication information to a session management network element.

16. The method according to claim 15, further comprising:
receiving, by the policy control network element, second indication information from the application function network element, wherein the second indication information indicates a preset ratio of a transmission success rate, and a minimum ratio of a total quantity of packets that need to be successfully transmitted before presence of the packet that fails to be transmitted in the protocol data unit set to a total quantity of packets comprised in the protocol data unit set; and
sending, by the policy control network element, the second indication information to the session management network element.

17. A protocol data unit set transmission apparatus, wherein the apparatus is a first device or a chip in a first device, and the apparatus comprises a processing unit and a transceiver unit; and
the processing unit invokes the transceiver unit to:
in a process in which a protocol data unit set of a service used on a terminal device is transmitted to a second device, determine that a first packet in the protocol data unit set fails to be transmitted; and discard a packet whose sequence number is greater than a sequence number of the first packet in the protocol data unit set.

18. The apparatus according to claim 17, wherein the protocol data unit set comprises a plurality of uplink packets, and the first device is the terminal device; or the protocol data unit set comprises a plurality of downlink packets, and the first device is a user plane network element; and
the processing unit is further configured to: determine a plurality of packets that belong to the protocol data unit set; and add a sequence number of each packet in the plurality of packets to a header of the corresponding packet.

19. The apparatus according to claim 18, wherein the processing unit is further configured to: when a received second packet comprises a preset field and a received third packet comprises the preset field, determine that a packet received after the second packet to the third packet belong to the protocol data unit set; or
determine that packets with a same timestamp belong to a same protocol data unit set.

20. The apparatus according to any one of claims 17 to 19, wherein the transceiver unit is configured to: receive first indication information from a session management network element, wherein the first indication information indicates to discard, when a packet that fails to be transmitted is determined in the process of transmitting the protocol data unit set, a packet whose sequence number is greater than a sequence number of the packet that fails to be transmitted in the protocol data unit set.

21. The apparatus according to any one of claims 17 to 20, wherein the processing unit is further configured to perform transmission in ascending order of sequence numbers of the plurality of packets in the protocol data unit set.

22. The apparatus according to any one of claims 17 to 20, wherein the protocol data unit set comprises a first-part packet and a second-part packet, the first-part packet and the second-part packet do not overlap, a priority of the first-part packet is higher than a priority of the second-part packet, a header of each packet in the first-part packet comprises a first identifier, a header of each packet in the second-part packet comprises a second identifier, and a ratio of a total quantity of the first-part packet to a total quantity of packets comprised in the protocol data unit set is greater than or equal to a preset ratio of a transmission success rate; and
the processing unit is further configured to: before it is determined that the first packet in the protocol data unit set fails to be transmitted, transmit the first-part packet through a first QoS flow based on the first identifier, and transmit the second-part packet through a second QoS flow based on the second identifier.

23. The apparatus according to claim 22, wherein the transceiver unit is configured to receive second indication information from the session management network element, wherein the second indication information indicates the preset ratio of the transmission success rate.

24. The apparatus according to claim 22 or 23, wherein the protocol data unit set comprises the plurality of uplink packets, and the first device is the terminal device; or the protocol data unit set comprises the plurality of downlink packets, and the first device is the user plane network element; and
the processing unit is further configured to: determine the first-part packet and the second-part packet based on the preset ratio of the transmission success rate; add the first identifier to the header of each packet in the first-part packet; and add the second identifier to the header of each packet in the second-part packet.

25. The apparatus according to any one of claims 22 to 24, wherein the first identifier is an identifier of the first QoS flow, and the second identifier is an identifier of the second QoS flow.

26. The apparatus according to any one of claims 22 to 25, wherein if the protocol data unit set comprises the plurality of downlink packets, and the first device is the user plane network element, the header of each packet is a general packet radio service tunneling protocol-user plane GTP-U layer header; or
if the protocol data unit set comprises the plurality of uplink packets, and the first device is the terminal device, the header of each packet is a packet data convergence protocol PDCP layer header or a service data adaptation protocol SDAP layer header.

27. The apparatus according to any one of claims 17 to 26, wherein the processing unit is further configured to: after the packet whose sequence number is greater than the sequence number of the first packet in the protocol data unit set is discarded, continue to transmit a packet whose sequence number is less than the sequence number of the first packet.

28. The apparatus according to any one of claims 17 to 27, wherein the processing unit is further configured to: when it is determined that the first packet in the protocol data unit set fails to be transmitted, determine that a quantity of retransmissions of the first packet exceeds a retransmission threshold; or determine that transmission duration of the first packet exceeds a transmission duration threshold.

29. A protocol data unit set transmission apparatus, wherein the apparatus is a session management network element or a chip in a session management network element, and the apparatus comprises a processing unit and a transceiver unit; and
the processing unit invokes the transceiver unit to:
receive first indication information from a policy control network element, wherein the first indication information indicates to discard, when a packet that fails to be transmitted is determined in a process of transmitting a protocol data unit set, a packet whose sequence number is greater than a sequence number of the packet that fails to be transmitted in the protocol data unit set; and
send the first indication information to a first device.

30. The apparatus according to claim 29, wherein the transceiver unit is configured to: receive second indication information from the policy control network element, wherein the second indication information indicates a preset ratio of a transmission success rate, and the preset ratio of the transmission success rate is a minimum ratio of a total quantity of packets that need to be successfully transmitted before presence of the packet that fails to be transmitted in the protocol data unit set to a total quantity of packets comprised in the protocol data unit set; and send the second indication information to the first device.

31. A protocol data unit set transmission apparatus, wherein the apparatus is a policy control network element or a chip in a policy control network element, and the apparatus comprises a processing unit and a transceiver unit; and
the processing unit invokes the transceiver unit to:
receive first indication information from an application function network element, wherein the first indication information indicates to discard, when a packet that fails to be transmitted is determined in a process of transmitting a protocol data unit set, a packet whose sequence number is greater than a sequence number of the packet that fails to be transmitted in the protocol data unit set; and
send the first indication information to a session management network element.

32. The apparatus according to claim 31, wherein the transceiver unit is configured to receive second indication information from the application function network element, wherein the second indication information indicates a preset ratio of a transmission success rate, and a minimum ratio of a total quantity of packets that need to be successfully transmitted before presence of the packet that fails to be transmitted in the protocol data unit set to a total quantity of packets comprised in the protocol data unit set; and
send the second indication information to the session management network element.

33. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus, and the processor is configured to implement the method according to any one of claims 1 to 16 by using a logic circuit or by executing code instructions.

34. A computer-readable storage medium, wherein the storage medium stores a computer program or instructions, and when the computer program or the instructions are executed by a communication apparatus, the method according to any one of claims 1 to 16 is implemented.
